# EUROPÄISCHE PATENTSCHRIFT

(11) **EP 1 603 969 B1**
(45) Veröffentlichungstag und Bekanntmachung des Hinweises auf die Patenterteilung: **03.10.2007**
(21) Anmeldenummer: 04721898.7
(22) Anmeldetag: 19.03.2004
(51) Int. Cl.: C08J 5/24, C08G 73/06, C08L 61/28

(54) **PREPREGS FÜR FASERVERBUNDE HOHER FESTIGKEIT UND ELASTIZITÄT**
PRE-IMPREGNATING AGENTS FOR HIGH-RESISTANT AND ELASTIC COMPOSITE FIBRES
PREIMPREGNES POUR FIBRES COMPOSITES AYANT UNE RESISTANCE ET UNE ELASTICITE ELEVEE

(30) Priorität: 19.03.2003 DE 10313200
(43) Veröffentlichungstag der Anmeldung: 14.12.2005
(73) Patentinhaber: AMI Agrolinz Melamine International GmbH, 4021 Linz (AT)
(72) Erfinder: RÄTZSCH, Manfred, A-4073 Wilhering (AT); DICKE, René, 4060 Leonding (AT); MACHHERNDL, Markus, A-LINZ Leonding (AT); BURGER, Martin, A-4020 Linz (AT); KNOBELSDORF, Carmen, 07318 Saalfeld (DE); REUSSMANN, Thomas, 07407 Rudolfstadt (DE)
(74) Vertreter: Gross, Felix
(86) Internationale Anmeldenummer: PCT/EP2004/002906
(87) Internationale Veröffentlichungsnummer: WO 2004/083288

(56) Entgegenhaltungen:
- EP-A- 1 279 686
- US-A- 5 206 066

## Beschreibung

Die Erfindung betrifft Aminoplaste enthaltende Prepregs für Faserververbunde hoher Festigkeit und Elastizität sowie ein Verfahren zu deren Herstellung.

Der Einsatz von Aminoplasten wie Melaminharzen zur Verbesserung der Faltenbeständigkeit, Flammfestigkeit und Verrottungsresistenz von textilen Flächengebilden aus Celluloseacetat (GB 1 164 424 A1), Polyamid (JP 53 028 707 A2) oder Polyestern (GB 2 028 352 B2) ist bekannt.

Weiterhin bekannt ist die Herstellung von Faserverbunden aus Prepregs auf Basis von Matten oder Vliesen aus Glasfasern (US 3 574 027 A), Jutefasern (JP 10 016 123 A2), Keramikfasern (JP 04 316 836 A2) Asbestfasern (DE 19 10 097 A1) oder Flachsfasern [Hagstrand, P., Polym. Compos.(2001), 22(4), 568-578], die mit Aminoplasten wie Harnstoff oder Melaminharzen imprägniert sind.

Von Nachteil bei der Verwendung üblicher Aminoplast-Laminierharze bei der Herstellung von Faserverbunden ist die unbefriedigende Eigenschaftskombination von Festigkeit und Elastizität der Verbunde.

Ziel der Erfindung sind Aminoplaste enthaltende Prepregs für Faserververbunde, die eine verbesserte Festigkeit und Elastizität besitzen.

Die Aufgabe der Erfindung wurde durch Prepregs für Faserverbunde gelöst, die erfindungsgemäss aus 50 bis 85 Masse% textilen Flächengebilden und 15 bis 50 Masse% Carbamidsäureestergruppen enthaltenden Polyaminotriazinethern auf Basis von
A) Aminotriazinethern der Struktur 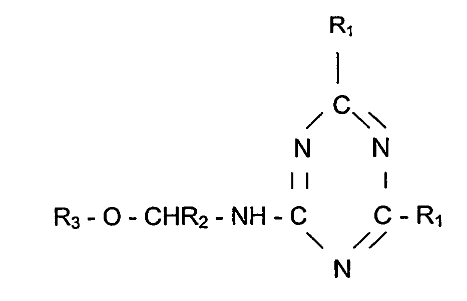
   - R₁ =: -NH₂, -NH-CHR₂-OH, -NH-CHR₂-O-R₃, -NH-CHR₂-O-R₄-OH, -CH₃, -C₃H₇, -C₆H₅, -OH, Phthalimido-, Succinimido-, -NH-CO-C₅-C₁₈-Alkyl, -NH-C₅-C₁₈-Alkylen-OH, -NH-CHR₂-O-C₅-C₁₈-Alkylen-NH₂, -NH-C₅-C₁₈-Alkylen-NH₂,
   - R₂ =: -H, -C₁-C₇ - Alkyl;
   - R₃: = -C₁-C₁₈ - Alkyl, -R₄-OH,
   - R₄ =: -CH(CH₃)-CH₂-O-C₂-C₁₂-Alkylen-O-CH₂-CH(CH₃)-,
   -CH(CH₃)-CH₂-O-C₂-C₁₂-Arylen-O-CH₂-CH(CH₃)-,
   -[CH₂-CH₂-O-CH₂-CH₂]ₙ-, -[CH₂-CH(CH₃)-O-CH₂-CH(CH₃)]ₙ-, -[O-CH₂-CH₂-CH₂-CH₂]ₙ-,
   -[(CH₂)₂₋₈-O-CO-C₆-C₁₄-Arylen-CO-O-(CH₂)₂₋₈]ₙ-,
   -[(CH₂)₂₋₈-O-CO-C₂-C₁₂-Alkylen-CO-O-(CH₂)₂₋₈]ₙ-,
   wobei n = 1 bis 200;
   - Siloxangruppen enthaltende Polyestersequenzen des Typs -[(X)ᵣ-O-CO-(Y)ₛ-CO-O-(X)ᵣ]-, bei denen
   - X =: -{(CH₂)₂₋₈-O-CO-C₆-C₁₄-Arylen-CO-O-(CH₂)₂₋₈}- oder
   -{(CH₂)₂₋₈-O-CO-C₂-C₁₂-Alkylen-CO-O-(CH₂)₂₋₈}-; 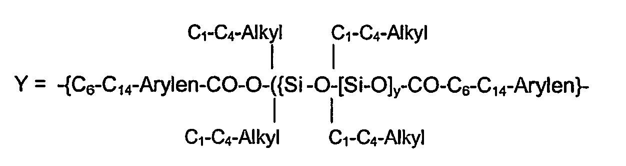
   oder 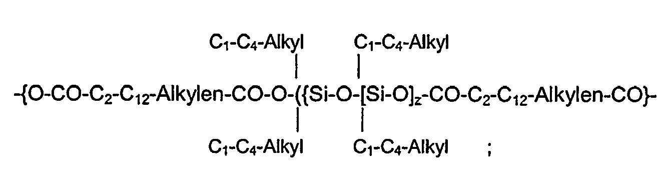 r = 1 bis 70; s = 1 bis 70 und y = 3 bis 50 bedeuten;
   - Siloxangruppen enthaltende Polyethersequenzen des Typs 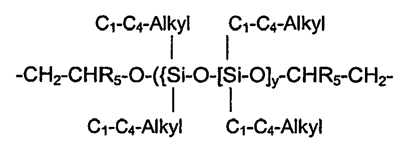 wobei R₅ = H; C₁-C₄-Alkyl und y = 3 bis 50 bedeuten;
   - Sequenzen auf Basis von Alkylenoxidaddukten des Melamins vom Typ 2-Amino-4,6-di-C₂-C₄-alkylenamino-1,3,5-triazin - Sequenzen:
   - Phenolethersequenzen auf Basis zweiwertiger Phenole und C₂-C₈-Diolen vom Typ -C₂-C₈-Alkylen-O-C₆-C₁₈-Arylen-O-C₂-C₈-Alkylen- Sequenzen;
      und/oder
B) Mischungen aus 10 bis 90 Masse% Aminotriazinethern A) und 90 bis 10 Masse% Polyaminotriazinethern mit Molmassen von 300 bis 5000, wobei die Polyaminotriazinether durch thermische Selbstkondensation von Aminotriazinethem A) gebildet werden, und
C) Isocyanaten der Formel R₆ (N = C = O)₂,
   wobei R₆ = C₆-C₁₄-Arylen, C₄ - C₁₈-Alkylen, und/oderC₅-C₈ - Cycloalkylen, und/oder oligomere Polyester bzw. Polyether mit Isocyanat- Endgruppen und Molmassen von 200 bis 5000,
bestehen, wobei das Molverhältnis Triazinsegment / Carbamidsäureestergruppen 1 : 1 bis 1 : 4 beträgt.

In den Prepregs sind die textilen Trägermaterialien bevorzugt Gewebe oder Vliese, insbesondere Gewebe oder Vliese aus Glasfasern, Kohlenstofffasern, Polyamidfasern, Polyesterfasern, Polypropylenfasern und/oder Duroplastfasern.

Beispiele für Polyamidfasern, aus denen die textilen Trägermaterialien in den Prepregs bestehen können, sind Fasern aus Polyamid-6, Polyamid-6,6, Polyamid-11 Polyamid-12 und Poly-m-phenylenisophthalamid.

Beispiele für Polyesterfasern, aus denen die textilen Trägermaterialien in den Prepregs bestehen können, sind Fasern aus Polyethylenterephthalat, Polybutylenterephthalat oder Poly-p-oxybenzoesäure.

Beispiele für Duroplastfasern, aus denen die textilen Trägermaterialien in den Prepregs bestehen können, sind Fasern aus Melaminharzen oder Phenolharzen.

In den Carbamidsäureestergruppen enthaltenden Polyaminotriazinethern der Prepregs ist das Verhältnis Aldehydkomponente/Triazinkomponente bevorzugt 1 : 1 bis 3 : 1.

Beispiele für geeignete Aminotriazinkomponenten in den Aminotriazinethern, die durch den Substituent R₁ in der Strukturformel definiert sind, sind Melamin, Acetoguanamin, Benzoguanamin, Butyroguanamin, N-(4,6-Diamino-1,3,5-triazin-2-yl)phthalimid und 2,4-Diamino-6-succinimido-1,3,5-triazin.

Beispiele für geeignete C₁-C₈-Aldehyd-Komponenten in den Aminotriazinethern, die durch den Substituent R₂ in der Strukturformel definiert sind, sind Formaldehyd, Acetaldehyd und Trimethylolacetaldehyd.

Die Aminotriazinether als Basis für die Carbamidsäureestergruppen enthaltenden Polyaminotriazinether in den Prepregs lassen sich durch Umsetzung von Aminotriazinen mit C₁-C₈-Aldehyden zu Aminotriazin-Vorkondensaten, Veretherung der Aminotriazin-Vorkondensate mit C₁-C₄-Alkoholen, und gegebenenfalls nachfolgende Umetherung mit C₅-C₁₈-Alkoholen und/oder Diolen vom Typ HO-R₄-OH herstellen. Durch R₃ wird in der Strukturformel die Veretherungskomponente definiert, die ein C₁-C₁₈-Alkohol und/oder ein Diol vom Typ HO-R₄-OH ist.

Beispiele für C₁-C₄-Alkohole, die als Veretherungskomponente R₃ in den Aminotriazinethem enthalten sein können, sind Methanol, Isopropanol und Butanol.

Beispiele für C₅-C₁₈-Alkohole, die als Veretherungskomponente R₃ in den Aminotriazinethern enthalten sein können, sind Ethylhextylalkohol, Dodecylalkohol und Stearylalkohol.

Beispiele für Diole vom Typ HO-R₄-OH, R₄ = C₂-C₁₈-Alkylen, die als Veretherungskomponente R₃ in den Aminotriazinethern enthalten sein können, sind Ethylenglycol, Butandiol, Octandiol, Dodecandiol und Octadecandiol.

Beispiele für Diole vom Typ HO-R₄-OH, R₄ = -[CH₂-CH₂-O-CH₂-CH₂]ₙ - und n = 1-200 , die als Veretherungskomponente R₃ in den Aminotriazinethern enthalten sein können, sind Polyethylenglycole mit Molmassen von 500 bis 5000.

Beispiele für Diole vom Typ HO-R₄-OH, R₄ = -[CH₂-CH(CH₃)-O-CH₂-CH(CH₃)]ₙ - und n = 1-200, die als Veretherungskomponente R₃ in den Aminotriazinethern enthalten sein können, sind Polypropylenglycole mit Molmassen von 500 bis 5000.

Beispiele für Diole vom Typ HO-R₄-OH, R₄ = -[O-CH₂-CH₂-CH₂-CH₂]ₙ - und n = 1-200, die als Veretherungskomponente R₃ in den Aminotriazinethern enthalten sein können, sind Polytetrahydrofurane mit Molmassen von 500 bis 5000.

Beispiele für Diole vom Typ HO-R₄-OH,
R₄ = -[(CH₂)₂₋₈-O-CO-C₆-C₁₄Arylen-CO-O-(CH₂)₂₋₈]ₙ-, die als Veretherungskomponente R₃ in den Aminotriazinethern enthalten sein können, sind Ester und Polyester auf Basis gesättigter Dicarbonsäuren wie Terephthalsäure, Isophthalsäure oder Naphthalindicarbonsäure und Diolen wie Ethylenglycol, Butandiol, Neopentylglycol und/oder Hexandiol. Als Ester wird Bis(hydroxyethyl)terephthalat bevorzugt.

Beispiele für Diole vom Typ HO-R₄-OH,
R₄ = -[(CH₂)₂₋₈-O-CO-C₂-C₁₂-Alkylen-CO-O-(CH₂)₂₋₈]ₙ-, die als Veretherungskomponente R₃ in den Aminotriazinethern enthalten sein können, sind Polyester auf Basis gesättigter Dicarbonsäuren wie Adipinsäure und/oder Bernsteinsäure, ungesättigter Dicarbonsäuren wie Maleinsäure, Fumarsäure und/oder Itakonsäure und Diolen wie Ethylenglycol, Butandiol, Neopentylglycol und/oder Hexandiol.

Beispiele für Diole vom Typ HO-R₄-OH, R₄ = Siloxangruppen enthaltende Sequenzen des Typs 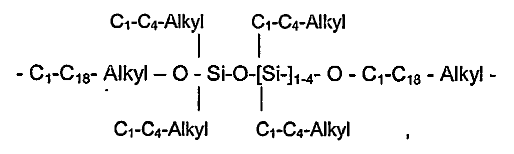 die als Veretherungskomponente R₃ in den Aminotriazinethern enthalten sein können, sind 1,3-Bis(hydroxybutyl)tetramethyldisiloxan und 1,3-Bis(hydroxyoctyl)tetraethyldisiloxan.

Beispiele für Polyestersequenzen mit Siloxangruppen enthaltenden Diolen vom Typ HO-R₄-OH, R₄ = -[(X)ᵣO-CO-(Y)ₛ-CO-O-(X)ᵣ]-, die als Veretherungskomponente R₃ in den Aminotriazinethern enthalten sein können,
bei denen
X = -{(CH₂)₂₋₈-O-CO-C₆-C₁₄-Arylen-CO-O-(CH₂)₂₋₈}- oder -{(CH₂)₂₋₈-O-CO-C₂-C₁₂-Alkylen-CO-O-(CH₂)₂₋₈}-; 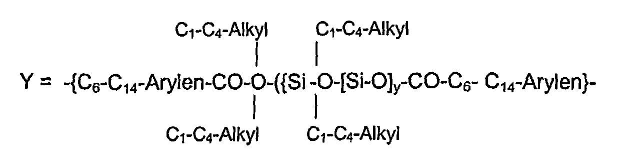 oder 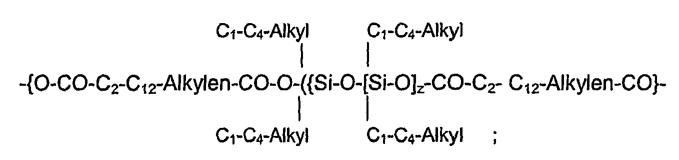 r = 1 bis 70; s = 1 bis 70 und y = 3 bis 50 bedeuten;
sind Hydroxylendgruppen enthaltende Polyester auf Basis aromatischer C₆-C₁₄-Arylendicarbonsäuren wie Terephthalsäure oder Naphthalindicarbonsäure, aliphatischer C₂-C₁₂-Alkylendicarbonsäuren wie Adipinsäure, Maleinsäure oder Pimelinsäure, Diolen wie Ethylenglycol, Butandiol, Neopentylglycol oder Hexandiol und Siloxanen wie Hexamethyldisiloxan oder α,ω-Dihydroxypolydimethylsiloxan.

Beispiele für Siloxangruppen enthaltende Polyetherdiole HO-R₄-OH, R₄ = Polyethersequenzen des Typs 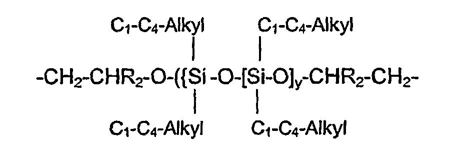 wobei R₂ = H; C₁-C₄-Alkyl und y = 3 bis 50;
die als Veretherungskomponente R₃ in den Aminotriazinethern enthalten sein können, sind Polyetherdiole auf Basis von Siloxanen wie Hexamethyldisiloxan oder α,ω-Dihydroxypolydimethylsiloxan und Alkylenoxiden wie Ethylenoxid oder Propylenoxid.

Beispiele für Diole auf Basis von Alkylenoxidaddukten des Melamins vom Typ 2-Amino-4,6-bis(hydroxy-C₂-C₄-alkylenamino)-1,3,5-triazin, die als Veretherungskomponente R₃ in den Aminotriazinethern enthalten sein können, sind Diole auf Basis von Melamin und Ethylenoxid oder Propylenoxid.

Beispiele für Phenoletherdiole auf Basis zweiwertiger Phenole und C₂-C₈-Dioten vom Typ Bis(hydroxy-C₂-C₈-Alkylen-O-)C₆-C₁₈-Arylen, die als Veretherungskomponente R₃ in den Aminotriazinethern enthalten sein können, sind Ethylenoxidaddukte oder Propylenoxidaddukte an Diphenylolpropan.

Neben Diolen als mehrwertige Alkohole können als Veretherungskomponente R₃ in den Aminotriazinethern ebenfalls dreiwertige Alkohole wie Glycerin oder vierwertige Alkohole wie Erythrit oder deren Mischungen mit zweiwertigen Alkoholen enthalten sein.

Ein bevorzugtes Verfahren zur Herstellung von Polyaminotriazinethern mit Molmassen von 300 bis 5000 als Basis für die Carbamidsäureestergruppen enthaltenden Polyaminotriazinether in den Prepregs besteht in der thermischen Selbstkondensation der Aminotriazinether in kontinuierlichen Knetern bei 120 bis 220°C.

In den Prepregs sind die Carbamidsäureestergruppen enthaltenden Polyaminotriazinether bevorzugt Polyaminotriazinether auf Basis von Melamin, Formaldehyd, Methanol und Diisocyanaten des Typs R₆(N = C = O)₂.

Beispiele für Isocyanate der Formel R₆(N = C = O)₂ als Isocyanatkomponente in den Carbamidsäureestergruppen enthaltenden Polytriazinethern sind Tetramethylendiisocyanat, Hexamethylendiisocyanat, Decamethylendüsocyanat, Diphenylmethandiisocyanat, p-Toluylendüsocyanat oder Diphenyloxiddiisocyanat.

Als Carbamidsäureestergruppen enthaltende Polyaminotriazinether werden insbesondere Polyaminotriazinether auf Basis von
B) Mischungen aus 5 bis 30 Masse% Aminotriazinethern A) und 95 bis 70 Masse% Polyaminotriazinethern mit Molmassen von 300 bis 5000, wobei die Polyaminotriazinether durch thermische Selbstkondensation von Aminotriazinethem A) gebildet werden, und
C) Isocyanaten der Formel R₆ (N = C = O)₂, wobei R₄ = C₄- C₁₈-Alkylen, und/oder C₅-C₈-Cycloalkylen, und/oder oligomere Polyester bzw. Polyether mit Isocyanat-Endgruppen und Molmassen von 200 bis 5000, bevorzugt.

Die Prepregs für Faserverbunde hoher Festigkeit und Elastizität werden nach einem Verfahren hergestellt, bei dem erfindungsgemäss Prepregs, die aus 50 bis 85 Masse% textilen Flächengebilden und 15 bis 50 Masse% Carbamidsäureestergruppen enthaltenden Polyaminotriazinethern bestehen, nach einem Schmelzeauftragsverfahren hergestellt werden, bei dem Gemische aus
A) Aminotriazinethern der Struktur 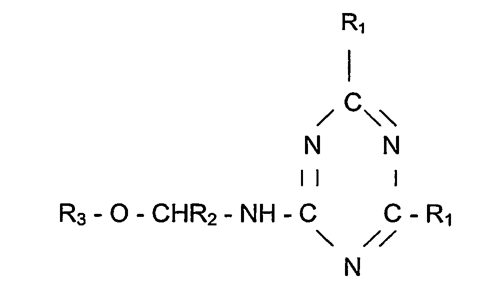
   - R₁ =: -NH₂, ,-NH-CHR₂-OH, -NH-CHR₂-O-R₃, -NH-CHR₂-O-R₄-OH, -CH₃, -C₃H₇, -C₆H₅, -OH, Phthalimido-, Succinimido-, -NH-CO-C₅-C₁₈-Alkyl, -NH-C₅-C₁₈-Alkylen-OH, -NH-CHR₂-O-C₅-C₁₈-Alkylen-NH₂, -NH-C₅-C₁₈-Alkylen-NH₂,
   - R₂ =: -H, -C₁-C₇ - Alkyl;
   - R₃ =: -C₁-C₁₈ - Alkyl, -R₄-OH,
   - R₄ =: -CH(CH₃)-CH₂-O-C₂-C₁₂-Alkylen-O-CH₂-CH(CH₃)-,
   -CH(CH₃)-CH₂-O-C₂-C₁₂-Arylen-O-CH₂-CH(CH₃)-,
   -[CH₂-CH₂-O-CH₂-CH₂]ₙ-, -[CH₂-CH(CH₃)-O-CH₂-CH(CH₃)]ₙ-, -[O-CH₂-CH₂-CH₂-CH₂]ₙ-,
   -[(CH₂)₂₋₈-O-CO-C₆-C₁₄-Arylen-CO-O-(CH₂)₂₋₈]ₙ-,
   -[(CH₂)₂₋₈-O-CO-C₂-C₁₂-Alkylen-CO-O-(CH₂)₂₋₈]ₙ-,
   wobei n =1 1 bis 200;
   - Siloxangruppen enthaltende Polyestersequenzen des Typs -[(X)ᵣ-O-CO-(Y)ₛ-CO-O-(X)ᵣ]-, bei denen
   - X =: -{(CH₂)₂₋₈-O-CO-C₆-C₁₄-Arylen-CO-O-(CH₂)₂₋₈}- oder -{(CH₂)₂₋₈-O-CO-C₂-C₁₂-Alkylen-CO-O-(CH₂)_{2-8}}-; 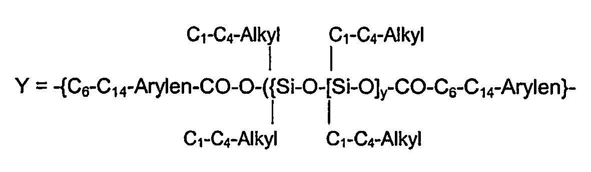 oder 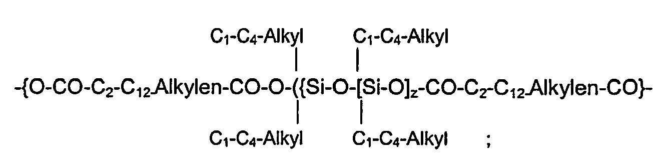 r = 1 bis 70; s = 1 bis 70 und y = 3 bis 50 bedeuten;

   - Siloxangruppen enthaltende Polyethersequenzen des Typs 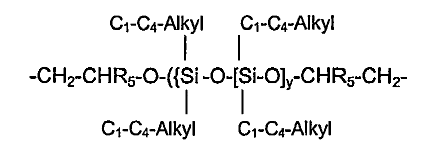 wobei R₅ = -H; -C₁-C₄-Alkyl und y = 3 bis 50 bedeuten;
   - Sequenzen auf Basis von Alkylenoxidaddukten des Melamins vom Typ 2-Amino-4,6-di-C₂-C₄-alkylenamino-1,3,5-triazin - Sequenzen:
   - Phenolethersequenzen auf Basis zweiwertiger Phenole und C₂-C₈-Diolen vom Typ -C₂-C₈-Alkylen-O-C₆-C₁₈-Arylen-O-C₂-C₈-Alkylen- Sequenzen;
      und/oder
B) Mischungen aus 10 bis 90 Masse% Aminotriazinethem A) und 90 bis 10 Masse% Polyaminotriazinethern mit Molmassen von 300 bis 5000, wobei die Polyaminotriazinether durch thermische Selbstkondensation von Aminotriazinethem A) gebildet werden, und
C) Isocyanaten der Formel R₆ (N = C = O)₂,
wobei R₆ = C₆-C₁₄-Arylen, C₄ - C₁₈-Alkylen, und/oder C₅ - C₈ - Cycloalkylen, und/oder oligomere Polyester bzw. Polyether mit Isocyanat- Endgruppen und Molmassen von 200 bis 5000,
wobei das Molverhältnis Diisocyanat / Summe Iminogruppen und Aminogruppen in der Triazinsequenz 0,15 : 1 bis 0,65 : 1 beträgt, und
wobei die Mischungen 0,05 bis 2 Masse%, bezogen auf die Aminotriazinether, latente Härter enthalten können,
bei Temperaturen von 85 bis 130°C aufgeschmolzen, umgesetzt und auf die textilen Trägermaterialien aufgebracht werden.

Mischungen, die überwiegend aus Aminotriazinethern und Diisocyanaten bestehen, lassen sich beim Schmelzeauftragsverfahren durch Rakeln oder Aufsprühen der niederviscosen Schmelze auf die bewegte Flächenbahn aufbringen.

Extrusionsbeschichtungsanlagen sind beim Schmeizeauftragsverfahren zum Aufschmelzen und Aufbringen von höherviscosen Mischungen, die überwiegend aus Polyaminotriazinethern und Diisocyanaten bestehen, geeignet.

Ein zweites Verfahren zur Herstellung von Prepregs für Faserverbunde hoher Festigkeit und Elastizität besteht darin, dass erfindungsgemäss Prepregs, die aus 50 bis 85 Masse% textilen Flächengebilden und 15 bis 50 Masse% Carbamidsäureestergruppen enthaltenden Polyaminotriazinethern bestehen, nach einem Flüssigauftragsverfahren hergestellt werden, bei dem Dispersionen in C₅-C₁₂-Kohlenwasserstoffen und/oder C₃-C₁₂-Ketonen oder Lösungen in Dimethylsulfoxid, Dimethylformamid und/oder Dimethylacetamid mit einem Feststoffgehalt von 25 bis 70 Masse% aus
A) Aminotriazinethem der Struktur 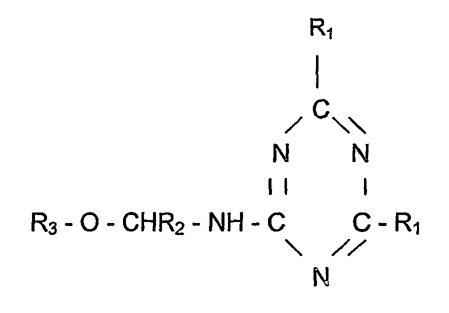
   - R₁ =: -NH₂, -NH-CHR₂-OH, -NH-CHR₂-R₃, -NH-CHR₂-O-R₄-OH, -CH₃, -C₃H₇, -C₆H₅, -OH, Phthalimido-, Succinimido-, -NH-CO-C₅-C₁₈-Alkyl, -NH-C₅-C₁₈-Alkylen-OH, -NH-CHR₂-O-C₅-C₁₈-Alkylen-NH₂, -NH-C₅-C₁₈-Alkylen-NH₂,
   - R₂ =: -H, -C₁-C₇ - Alkyl;
   - R₃ =: -C₁-C₁₈ - Alkyl, -R₄-OH,
   - R₄ =: -CH(CH₃)-CH₂-O-C₂-C₁₂-Alkylen-O-CH₂-CH(CH₃)-,
   -CH(CH₃)CH₂-O-C₂-C₁₂-Arylen-O-CH₂-CH(CH₃)-,
   -[CH₂-CH₂-O-CH₂CH_{2]n} -, -[CH₂-CH(CH₃)-O-CH₂-CH(CH₃)]ₙ-, -[O-CH₂-CH₂-CH₂-CH₂]ₙ-,
   -[(CH₂)₂₋₈-O-CO-C₆-C₁₄-Arylen-CO-O-(CH₂)₂₋₈] -,
   -[(CH₂)₂₋₈-O-CO-C₂-C₁₂-Alkylen-CO-O-(CH₂)₂₋₈]ₙ-,
   wobei n = 1 bis 200;
   - Siloxangruppen enthaltende Polyestersequenzen des Typs -[(X)ᵣ-O-CO-(Y)ₛ-CO-O-(X)ᵣ]- ,
   bei denen
   - X =: -{(CH₂)₂₋₈-O-CO-C₆-C₁₄-Arylen-CO-O-(CH₂)₂₋₈}- oder
   -{(CH₂)₂₋₈-O-CO-C₂-C₁₂-Alkylen-CO-O-(CH₂)₂₋₈}-; 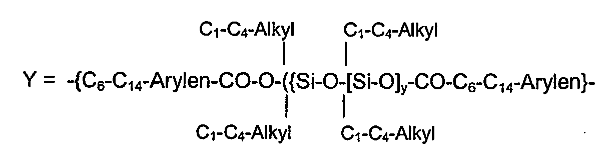 oder 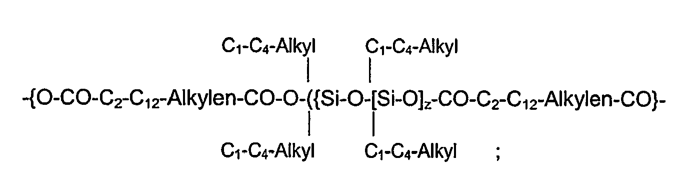 r = 1 bis 70; s = ₁ bis 70 und y = 3 bis 50 bedeuten;
   - Siloxangruppen enthaltende Polyethersequenzen des Typs 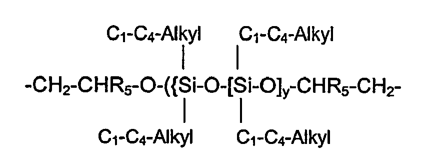 wobei R₅ = -H; -C₁-C₄-Alkyl und y = 3 bis 50 bedeuten;
   - Sequenzen auf Basis von Alkylenoxidaddukten des Melamins vom Typ 2-Amino-4,6-di-C₂-C₄-alkylenamino-1,3,5-triazin - Sequenzen:
   - Phenolethersequenzen auf Basis zweiwertiger Phenole und C₂-C₈-Diolen vom Typ -C₂-C₈-Alkylen-O-C₆-C₁₈-Arylen-O-C₂-C₈-Alkylen- Sequenzen;
      und/oder
B) Mischungen aus 10 bis 90 Masse% Aminotriazinethern A) und 90 bis 10 Masse% Polyaminotriazinethern mit Molmassen von 300 bis 5000, wobei die Polyaminotriazinether durch Selbstkondensation von Triazinethern A) gebildet werden, und
C) Isocyanaten der Formel R₆ (N = C = O)₂,
wobei R₆ = -C₆-C₁₄-Arylen, -C₄-C₁₈-Alkylen, und/oder -C₅-C₈-Cycloalkylen, und/oder oligomere Polyester bzw. Polyether mit Isocyanat- Endgruppen und Molmassen von 200 bis 5000,
wobei das Molverhältnis Diisocyanat / Summe Iminogruppen und Aminogruppen in der Triazinsequenz 0,15 : 1 bis 0,65 : 1 beträgt, und
wobei die Mischungen 0,05 bis 2 Masse%, bezogen auf die Aminotriazinether, latente Härter enthalten können,
bei Temperaturen von 5 bis 80°C in Kontakt mit den textilen Trägermaterialien gebracht und bei 80 bis 120°C/ 0,1 bis 1 bar umgesetzt und getrocknet werden.

Beispiele für C₅-C₁₂-Kohlenwasserstoffe, die als Dispersionsmittel beim Flüssigauftragsverfahren eingesetzt werden können, sind Pentan, Isooctan und Dodecan.

Beispiele für C₃-C₁₂-Ketone, die als Dispersionsmittel beim Flüssigauftragsverfahren eingesetzt werden können, sind Methylethylketon, Diisobutylketon und Ethylhexylketon.

Beim Schmelzeauftragsverfahren und beim Flüssigauftragsverfahren zur Herstellung von Prepregs wird als Aminotriazinether bevorzugt 2,4,6-Tris(methoxymethylamino)-1,3,5-triazin eingesetzt.

Beim Schmelzeauftragsverfahren und beim Flüssigauftragsverfahren zur Herstellung von Prepregs werden als latente Härter bevorzugt schwache Säuren, insbesondere
- blockierte Sulfonsäuren,
- Alkalisalze oder Ammoniumsalze der Phosphorsäure,
- C₁-C₁₂-Alkylester oder C₂-C₈-Hydroxyalkylester von C₆-C₁₄-aromatischen Carbonsäuren oder anorganischen Säuren,
- Salze von Melamin oder Guanaminen mit C₁-C₁₈-aliphatischen Carbonsäuren,
- Anhydride, Halbester oder Halbamide von C₄-C₂₀-Dicarbonsäuren,
- Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten, und/oder
- Salze von C₁-C₁₂-Alkylaminen bzw. Alkanolaminen mit C₁-C₁₈-aliphatischen, C₆-C₁₄-aromatischen oder alkylaromatischen Carbonsäuren sowie anorganischen Säuren vom Typ Salzsäure, Schwefelsäure oder Phosphorsäure,
eingesetzt.

Beispiele für blockierte Sulfonsäuren, die als latente Härter bei der Herstellung der Prepregs eingesetzt werden können, sind Benzilmonoximtosylat, α-Cyclohexylsulfonyloxyiminophenylessigsäureethylester, Acetonoxim-*p*-benzoylbenzolsulfonat, α-(4-Nitrobenzol-sulfonyloxyimino)benzylcyanid, 2-Nitrobenzylsulfonat und 2-Methylsulfonyl-oxyimino-4-phenyl-but-3-ennitril.

Beispiele für aliphatische C₄-C₁₈-Carbonsäuren, die als latente Härter bei der Herstellung der Prepregs eingesetzt werden können, sind Buttersäure, Capronsäure, Palmitinsäure, Stearinsäure und Ölsäure.

Beispiele für Alkalisalze oder Ammoniumsalze der Phosphorsäure, die als latente Härter bei der Herstellung der Prepregs eingesetzt werden können, sind Ammoniumhydrogenphosphat, Natriumpolyphosphat und Kaliumhydrogenphosphat.

Beispiele für C₁-C₁₂-Alkylester oder C₂-C₈-Hydroxyalkylester von C₆-C₁₄-aromatischen Carbonsäuren oder anorganischen Säuren, die als latente Härter bei der Herstellung der Prepregs eingesetzt werden können, sind Dibutylphthalat, Phthalsäurediglycolester und/oder Trimellithsäureglycolester.

Beispiele für Salze von Melamin oder Guanaminen mit C₁-C₁₈-aliphatischen Carbonsäuren, die als latente Härter bei der Herstellung der Prepregs eingesetzt werden können, sind Melaminformiat, Melamincitrat und/oder Acetoguanaminbutyrat.

Beispiele für Anhydride, Halbester oder Halbamide von C₄-C₂₀-Dicarbonsäuren, die als latente Härter bei der Herstellung der Prepregs eingesetzt werden können, sind Maleinsäureanhydrid, Mono-C₁-C₁₈-alkylmaleate wie Maleinsäuremonobutylester, Maleinsäuremonoethylhexylester oder Monostearylmaleat oder Maleinsäuremono-C₁-C₁₈-alkylamide wie Maleinsäuremonoethylamid, Maleinsäuremonooctylamid oder Maleinsäuremonostearylamid.

Beispiele für Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten, die als latente Härter bei der Herstellung der Prepregs eingesetzt werden können, sind Halbester oder Halbamide von Copolymeren aus Maleinsäureanhydrid und C₃-C₈-α-Olefinen vom Typ Isobuten, Diisobuten und/oder 4-Methylpenten und/oder Styren mit einem Molverhältnis Maleinsäureanhydrid/C₃-C₈-a-Olefin bzw. Styren bzw. entsprechender Monomermischungen von 1 : 1 bis 1 : 5.

Beispiele für Salze von C₁-C₁₂-Alkylaminen bzw. Alkanolaminen mit C₁-C₁₈-aliphatischen, C₆-C₁₄-aromatischen oder alkylaromatischen Carbonsäuren sowie anorganischen Säuren vom Typ Salzsäure, Schwefelsäure oder Phosphorsäure, die als latente Härter bei der Herstellung der Prepregs eingesetzt werden können, sind Ethanolammmoniumchlorid, Triethylammoniummaleat, Diethanolammoniumphosphat und/oder Isopropylammonium-*p-*toluolsulfonat.

Erfindungsgemäss sind weiterhin Faserverbunde, die unter Verwendung der vorbeschriebenen Prepregs hergestellt werden.

Für die Herstellung der Faserverbunde können die Prepregs, die aus 50 bis 85 Masse% textilen Flächengebilden und 15 bis 50 Masse% Carbamidsäureestergruppen enthaltenden Polyaminotriazinethern bestehen, bei Temperaturen von 135°C bis 190°C und Verweilzeiten von 4 bis 90 min einlagig, oder mehrlagig bevorzugt in Pressen bei 40 bis 120 bar, ausgehärtet werden.

Die Aushärtung der Prepregs bei Temperaturen von 135°C bis 190°C und Verweilzeiten von 4 bis 90 min kann ebenfalls nach Laminierung der Prepregs, die aus 50 bis 85 Masse% textilen Flächengebilden und 15 bis 50 Masse% Carbamidsäureestergruppen enthaltenden Polyaminotriazinethern bestehen, mit flächigen Trägermaterialien aus Holz, Metall, Kunststoffen, Papier, Pappe, textilen Flächengebilden oder Prepregs auf Basis von Trägermaterialien wie textilen Flächengebilden oder Papier, die mit Laminierharzen wie Epoxidharzen, Phenolharzen oder ungesättigten Polyesterharzen imprägniert sind, bevorzugt in Pressen unter Formgebung bei 40 bis 120 bar, erfolgen.

Beispiele für flächige Trägermaterialien, die bei der Herstellung von Faserverbunden durch Laminierung mit Prepregs aus 50 bis 85 Masse% textilen Flächengebilden und 15 bis 50 Masse% Carbamidsäureestergruppen enthaltenden Polyaminotriazinethern eingesetzt werden können, sind Kupferfolien, Kraftpapier-Prepregs, Polystyrenschaum, Polyolefinschaum, Metallnetze und Phenolharz-Glasfaser-Prepregs.

Die erfindungsgemässen Faserverbunde sind bevorzugt für den Einsatz als Hitzeschutzkleidung, Brandschutzdecken, Elektroisolationspapiere, flammfeste Bauelemente in der Elektronik, Baukonstruktionsteile und Fahrzeugausrüstungen geeignet.

Die Erfindung wird durch nachfolgende Beispiele erläutert:

### Beispiel 1

### 1.1 Herstellung der Mischung aus Aminotriazinether und Polyaminotriazinether

In einem 30 l Rührautoklav wird durch Eintragen von 1,0 kg Melamin in 13,7 kg Methanol bei 95°C eine Melamindispersion hergestellt, und nach Einstellung eines pH-Wertes von 6 in den Rührautoklav als Aldehydkomponente eine Mischung aus 3 kg Formaldehyd, 1,29 kg Methanol und 4,31 kg Wasser, die auf 90°C vortemperiert ist, unter Druck dosiert, und das Reaktionsgemisch bei einer Reaktionstemperatur von 95°C und einer Reaktionszeit von 5 min umgesetzt.

Nach Abkühlung auf 65°C wird durch Zugabe von n/10 Natronlauge ein pH-Wert von 9 eingestellt, und das im Wasser-Methanol-Gemisch gelöste veretherte Aminotriazinharzkondensat wird nach Zugabe von 2,23 kg Butanol in einen ersten Vacuumverdampfer überführt, in dem die Lösung des veretherten Aminotriazinharzkondensats bei 80°C zu einer hochkonzentrierten Aminotriazinharlösung, die einen Feststoffanteil von 75 Masse% und einen Gehalt an Butanol von 10 Masse% besitzt, eingeengt wird.

Nachfolgend wird die hochkonzentrierte Lösung des veretherten Aminotriazinharzes in einen zweiten Vacuumverdampfer überführt und bei 90°C zu einer sirupösen Schmelze eingeengt, die einen Feststoffanteil von 95 Masse% und einen Gehalt an Butanol von 5 Masse% besitzt.

### 1.2 Herstellung des Prepregs und Verpressung zum Faserverbund

Die sirupöse Schmelze wird mit 2,6 kg/h in den Einzugstrichter eines Laborextruders GL 27 D44 (Leistritz) mit Vacuumentgasungszonen nach der Einzugszone sowie vor dem Produktaustrag, Seitenstromdosierung für flüssige Medien und Breitschlitzdüse 100 x 2 mm, Temperaturprofil 180°C/220°C/220°C/220°C/200°C/170°C/140°C/110°C/90°C/90°C/90°C, Extruderdrehzahl 200 min-¹, dosiert, der Aminotriazinether thermisch kondensiert und die flüchtigen Anteile bei 100 mbar entgast.
Die dem Vacuumentgasungsstutzen entnommene Analysenprobe an Aminotriazinether/Polyaminotriazinether - Gemisch besitzt eine Molmasse von 650.
In die Schmelze des Polyaminotriazinether/Aminotriazinether-Gemischs wird über eine Seitenstromdosierung mit 2,25 kg/h Hexamethylendiisocyanat dosiert und mit dem Gemisch homogenisiert. Nach einer zweiten Vacuumentgasung mit 150 mbar wird die Schmelze durch die Breitschlitzdüse auf ein mit 5 m/min bewegtes Glasfasergewebe (Flächenmasse 200 g/m²) ausgetragen, das nach der Imprägnierung einen Heiztunnel. (120°C, mittlere Verweilzeit 8 min) durchläuft.

Das imprägnierte Glasfasergewebe besitzt einen Harzanteil von 44 Masse%. ATR-Untersuchungen ergeben ein Verhältnis Triazinsegment/Carbamidsäureestergruppen von 1 : 2,6.

Das imprägnierte Glasfasergewebe wird in einer Presse bei 160°C/30 bar 20 min unter Aushärtung verpresst.

Das Laminat besitzt folgende Werkstoffkennwerte :

| | | | |
|---|---|---|---|
| Biegefestigkeit: | 320 N/mm² | Schlagzähigkeit: | 78 kJ/m² |
| Zugfestigkeit: | 180 N/mm² | Dehnung: | 3%. |

Wird ein Laminat gleichen Harzanteils unter analogen Bedingungen, aber ohne Zusatz des Diisocyanats, hergestellt, so ergeben sich folgende Werkstoffkennwerte :

| | | | |
|---|---|---|---|
| Biegefestigkeit: | 290 N/mm² | Schlagzähigkeit: | 52 kJ/m² |
| Zugfestigkeit: | 168 N/mm² | Dehnung: | 2,2%. |

### Beispiel 2

### 2.1 Herstellung des Aminotriazinethers

In einem 30 l Rührautoklav wird durch Eintragen von 0,9 kg Melamin und 0,1 kg Benzoguanamin in 15 kg Methanol bei 95°C eine Aminotriazindispersion hergestellt, und nach Einstellung eines pH-Wertes von 6,2 in den Rührautoklav als Aldehydkomponente eine Mischung aus 2,7 kg Formaldehyd, 0,3 kg Glyoxal und 3 kg Wasser, die auf 90°C vortemperiert ist, unter Druck dosiert, und das Reaktionsgemisch bei einer Reaktionstemperatur von 90°C und einer Reaktionszeit von 10 min umgesetzt.

Nach Abkühlung auf 65°C wird durch Zugabe von n/10 Natronlauge ein pH-Wert von 9,2 eingestellt, und das im Wasser-Methanol-Gemisch gelöste veretherte Aminotriazinharzkondensat wird nach Zugabe von 0,6 kg Butanol in einen ersten Vacuumverdampfer überführt, in dem die Lösung des veretherten Aminotriazinharzkondensats bei 80°C zu einer hochkonzentrierten Aminotriazinharzlösung, die einen Feststoffanteil von 76 Masse% und einen Gehalt an Butanol von 3,1 Masse% besitzt, eingeengt wird.

Nachfolgend wird die hochkonzentrierten Lösung des veretherten Aminotriazinharzes in einer Mischstrecke mit 0,8 kg Simulsol BPLE (Oligoethylenglycolether von Bisphenol A) gemischt, in einen zweiten Vacuumverdampfer überführt und bei 90°C zu einer sirupösen Schmelze eingeengt, die einen Feststoffanteil von 98 Masse% und einen Gehalt an Butanol von 2,2 Masse% besitzt.

### 2.2 Herstellung des Prepregs und Verpressung zum Faserverbund

Die sirupöse Schmelze wird mit 2,8 kg/h in den Einzugstrichter eines Laborextruders GL 27 D44 (Leistritz) mit Vacuumentgasungszonen nach der Einzugszone sowie vor dem Produktaustrag, Seitenstromdosierung für flüssige Medien und Breitschlitzdüse 100 x 2 mm, Temperaturprofil 180°C/220°C/220°C/220°C/200°C/170°C/140°C/110°C/90°C/90°C/90°C, Extruderdrehzahl 200 min⁻¹, dosiert, der Aminotriazinether thermisch kondensiert und die flüchtigen Anteile bei 100 mbar entgast. Die aus dem Vacuumentgasungsstutzen entnommene Analysenprobe an Aminotriazinether/Polyaminotriazinether - Gemisch besitzt eine Molmasse von 3800.

In die Schmelze des Aminotriazinether/Polyaminotriazinether-Gemischs wird über eine Seitenstromdosierung mit 1,9 kg/h Tetramethylendiisocyanat dosiert und mit dem Gemisch homogenisiert. Nach einer zweiten Vacuumentgasung mit 150 mbar wird die Schmelze durch die Breitschlitzdüse auf ein mit 3,5 m/min bewegtes Glasfasergewebe (Flächenmasse 200 g/m²) ausgetragen, das nach der Imprägnierung einen Heiztunnel (120°C, mittlere Verweilzeit 8 min) durchläuft.

Das imprägnierte Glasfasergewebe besitzt einen Harzanteil von 50 Masse%. ATR-Untersuchungen des Prepregs ergeben ein Verhältnis Triazinsequenz/Carbamidsäureestergruppen von 1 : 3,7.

Das imprägnierte Glasfasergewebe wird in einer Presse bei 160°C/30 bar 20 min unter Aushärtung verpresst.

Das Laminat besitzt folgende Werkstoffkennwerte :

| | | | |
|---|---|---|---|
| Biegefestigkeit: | 330 N/mm² | Schlagzähigkeit: | 74 kJ/m² |
| Zugfestigkeit: | 188 N/mm² | Dehnung: | 2,8%. |

Wird ein Laminat gleichen Harzanteils unter analogen Bedingungen, aber ohne Zusatz des Diisocyanats, hergestellt, so ergeben sich folgende Werkstoffkennwerte :

| | | | |
|---|---|---|---|
| Biegefestigkeit: | 295 N/mm² | Schlagzähigkeit: | 50 kJ/m² |
| Zugfestigkeit: | 175 N/mm² | Dehnung: | 2,0%. |

### Beispiel 3

Für die Herstellung des Prepregs wird als Aminotriazinether 2,4,6-Tris(methoxymethylamino)-1,3,5-triazin, als Diolkomponente für die Umetherung Bis(hydroxyethyl)-terephthalat und als Diisocyanat Diphenyloxiddiisocyanat eingesetzt.

Die Umetherung und thermische Selbstkondensation des Aminotriazinethers wird im Messkneter (Fa. Haake Polylabsystem 540p) durchgeführt. Nach Vorheizen auf 170°C werden in die Knetkammer 32,5 g Bis(hydroxyethyl)terephthalat und 39,5 g 2,4,6-Tris-(methoxymethylamino)-1,3,5-triazin dosiert und bei einer Drehzahl von 50 min⁻¹ geknetet, bis nach einer Reaktionszeit von 6 min ein Drehmoment von 3 Nm erreicht ist. Nach Abkühlen wird das Gemisch aus Aminotriazinether und Polyaminotriazinether in einer Universal-Mühle 100 UPZ/II (Alpine Hosokawa) mit Schlagscheibe und 2 mm Sieb gemahlen. GPC-Untersuchungen ergeben eine Molmasse von 1650.

50 g des Gemischs aus Aminotriazinether und Polyaminotriazinether werden in 200 ml Dimethylsulfoxid bei 110°C gelöst und der Lösung nach Abkühlung auf 50°C 68 g Diphenyloxiddüsocyanat und 2 g Dibutylphthalat zugesetzt und die Mischung homogenisiert.

Die viscose Lösung wird mit einer Rakel auf eine Cellulosevliesbahn (120g/m², Lenzing AG, Österreich) aufgetragen, und das imprägnierte Cellulosevlies in einem Nadelleistenrahmen fixiert und in einem Vacuumtrockenschrank 5 Std. bei 115°C/0,1 bar getrocknet. Das so hergestellten Prepreg besitzen einen Harzauftrag von ca. 50%. ATR-Untersuchungen des Prepregs ergeben ein Verhältnis Triazinsequenz/Carbamidsäureestergruppen von 1 : 3.

Die Prepregs werden auf eine Größe von 30x20 cm zugeschnitten. Zur Herstellung eines Formteils mit gebogenen Kanten im Sinne eines U-Profils werden 3 Prepregs plus ein unbehandeltes Cellulosevlies als Oberseite übereinander in eine auf 160°C vorgeheizte Pressform (30x20cm) gelegt und die Presse langsam zugefahren, wobei sich die nicht ausgehärteten Prepregs leicht verformen lassen. Unter einem Druck von 160 bar wird die Temperatur auf 180°C erhöht und 20 min gepresst. Das fertige Werkstück wird entnommen, langsam abgekühlt, und der durch austretendes Harz an der Tauchkante des Presswerkzeuges entstandene Grat abgeschliffen.

Aus dem Werkstück herausgefräste Probekörper besitzen im Biegeversuch ein E-Modul von 6,5 GPa, eine Dehnung bei Maximalkraft von 3,2% und eine Schlagzähigkeit von 13 kJ/m².

## Patentansprüche

1. Prepregs für Faserverbunde hoher Festigkeit und Elastizität, **dadurch gekennzeichnet, dass** die Prepregs aus 50 bis 85 Masse% textilen Flächengebilden und 15 bis 50 Masse% Carbamidsäureestergruppen enthaltenden Polyaminotriazinethern auf Basis von
A) Aminotriazinethern der Struktur 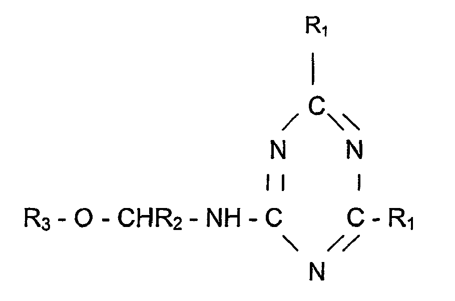
R₁= -NH₂, ,-NH-CHR₂-OH, -NH-CHR₂-O-R₃, -NH-CHR₂-O-R₄-OH, -CH₃, -C₃H₇, -C₆H₅, -OH, Phthalimido-, Succinimido-, -NH-CO-C₅-C₁₈-Alkyl, -NH-C₅-C₁₈-Alkylen-OH, -NH-CHR₂-O-C₅-C₁₈-Alkylen-NH₂, -NH-C₅-C₁₈-Alkylen-NH₂,
R₂ = -H, -C₁-C₇ - Alkyl;
R₃ = -C₁-C₁₈ - Alkyl. -R₄-OH,
R₄ = -CH(CH₃)-CH₂-O-C₂-C₁₂-Alkylen-O-CH₂-CH(CH₃)-,
-CH(CH₃)-CH₂-O-C₂-C₁₂-Arylen-O-CH₂-CH(CH₃)-,
-[CH₂-CH₂-O-CH₂-CH₂]ₙ -, -[CH₂-CH(CH₃)-O-CH₂-CH(CH₃)]ₙ -, -[O-CH₂-CH₂-CH₂-CH₂]ₙ-,
-[(CH₂)₂₋₈-O-CO-C₆-C₁₄-Arylen-CO-O-(CH₂)₂₋₈]ₙ -,
-[(CH₂)₂₋₈-O-CO-C₂-C₁₂-Alkylen-CO-O-(CH₂)₂₋₈]n-,
wobei n = 1 bis 200;
- Siloxangruppen enthaltende Polyestersequenzen des Typs -[(X)ᵣ-O-CO-(Y)ₛ-CO-O-(X)ᵣ]-, bei denen
X = -{(CH₂)₂₋₈-O-CO-C₆-C₁₄-Arylen-CO-O-(CH₂)₂₋₈}- oder -{(CH₂)₂₋₈-O-CO-C₂-C₁₂-Alkylen-CO-O-(CH₂)₂₋₈}-; 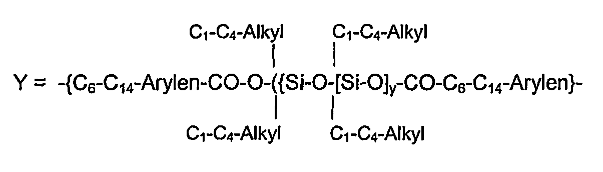 oder 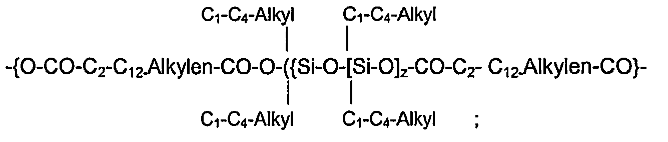 r = 1 bis 70; s = 1 bis 70 und y = 3 bis 50 bedeuten;
- Siloxangruppen enthaltende Polyethersequenzen des Typs 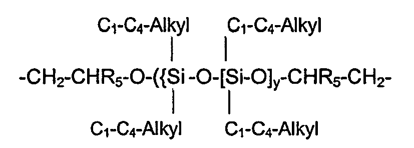 wobei R₅ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4}-alkylenamino-1,3,5-triazin - Sequenzen:
- Phenolethersequenzen auf Basis zweiwertiger Phenole und C₂-C₈-Diolen vom Typ -C₂-C₈-Akylen-O-C₆-C₁₈-Arylen-O-C₂-C₈-Alkylen- Sequenzen;
und/oder
B) Mischungen aus 10 bis 90 Masse% Aminotriazinethern A) und 90 bis 10 Masse% Polyaminotriazinethern mit Molmassen von 300 bis 5000, wobei die Polyaminotriazinether durch thermische Selbstkondensation von Aminotriazinethern A) gebildet werden, und
C) Isocyanaten der Formel R₆ (N = C = O)₂,
wobei R₆ = C₆-C,₄-Arylen, C₄ - C₁₈-Alkylen, und/oder C₅ - C₈ - Cycloalkylen, und/oder oligomere Polyester bzw. Polyether mit Isocyanat- Endgruppen und Molmassen von 200 bis 5000,
sind, wobei das Molverhältnis Triazinsegment / Carbamidsäureestergruppen 1 : 1 bis 1 : 4 beträgt.

2. Prepregs nach Anspruch 1, **dadurch gekennzeichnet, dass** die textilen Trägermaterialien Gewebe oder Vliesse, bevorzugt Gewebe oder Vliesse aus Glasfasern, Kohlenstofffasern, Polyamidfasern, Polyesterfasern, Polypropylenfasern und/oder Duroplastfasern sind.

3. Prepregs nach Anspruch 1 oder 2, **dadurch gekennzeichnet, dass** in den Carbamidsäureestergruppen enthaltenden Polyaminotriazinethern das Verhältnis Aldehydkomponente / Triazinkomponente 1 : 1 bis 3 : 1 ist.

4. Prepregs nach mindestens einem der vorhergehenden Ansprüche, **dadurch gekennzeichnet, dass** die Carbamidsäureestergruppen enthaltenden Polyaminotriazinether, Polyaminotriazinether auf Basis von Melamin, Formaldehyd, Methanol und Diisocyanaten des Typs R₆ (N = C = O)₂ sind.

5. Prepregs nach mindestens einem der vorhergehenden Ansprüche, **dadurch gekennzeichnet, dass** die Carbamidsäureestergruppen enthaltenden Polyaminotriazinethern, Polyaminotriazinether auf Basis von
B) Mischungen aus 5 bis 30 Masse% Aminotriazinethem A) und 95 bis 70 Masse% Polyaminotriazinethern mit Molmassen von 300 bis 5000, wobei die Polyaminotriazinether durch thermische Selbstkondensation von Aminotriazinethern A) gebildet werden, und
C) Isocyanaten der Formel R₆ (N = C = O)₂, wobei R₄ = C₄- C₁₈-Alkylen, und/oder C₅-C₈ - Cycloalkylen, und/oder oligomere Polyester bzw. Polyether mit Isocyanatendgruppen und Molmassen von 200 bis 5000, sind.

6. Verfahren zur Herstellung von Prepregs für Faserverbunde hoher Festigkeit und Elastizität, **dadurch gekennzeichnet, dass** Prepregs, die aus 50 bis 85 Masse% textilen Flächengebilden und 15 bis 50 Masse% Carbamidsäureestergruppen enthaltenden Polyaminotriazinethem bestehen, nach einem Schmelzeauftragsverfahren hergestellt werden, bei dem Gemische aus
A) Aminotriazinethern der Struktur 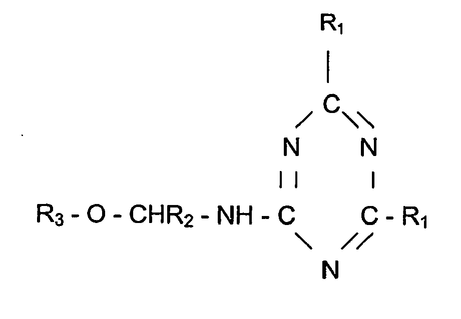
R₁ = -NH₂, -NH-CHR₂-OH, -NH-CHR₂-O-R₃, -NH-CHR₂-O-R₄-OH, -CH₃, -C₃H₇, -C₆H₅, -OH, Phthalimido-, Succinimido-, -NH-CO-C₅-C₁₈-Alkyl, -NH-C₅-C₁₈-Alkylen-OH, -NH-CHR₂-O-C₅-C₁₈-Alkylen-NH₂, -N H-C₅-C₁₈-Alkylen-NH₂,
R₂ = -H, -C₁-C₇ - Alkyl;
R₃ = C₁-C₁₈ - Alkyl, -R₄-OH,
R₄ = -CH(CH₃)-CH₂-O-C₂-C₁₂-Alkylen-O-CH₂-CH(CH₃)-,
-CH(CH₃)-CH₂-O-C₂-C₁₂-Arylen-O-CH₂-CH(CH₃)-,
-[CH₂-CH₂-O-CH₂-CH₂]ₙ -, -[CH₂-CH(CH₃)-O-CH₂-CH(CH₃)]ₙ -, -[O-CH₂-CH₂-CH₂-CH₂]ₙ-,
-[(CH₂)₂₋₈-O-CO-C₆-C₁₄-Arylen-CO-O-(CH₂)₂₋₈]ₙ-,
-[(CH₂)₂₋₈-O-CO-C₂-C₁₂-Alkylen-CO-O-(CH₂)₂₋₈]ₙ-,
wobei n = 1 bis 200;
- Siloxangruppen enthaltende Polyestersequenzen des Typs -[(X)ᵣ-O-CO-(Y)ₛ-CO-O-(X)ᵣ]-, bei denen
X = -{(CH₂)₂₋₈-O-CO-C₆-C₁₄-Arylen-CO-O-(CH₂)₂₋₈}- oder -{(CH₂)₂₋₈-O-CO-C₂-C₁₂-Alkylen-CO-O-(CH₂)₂₋₈}-; 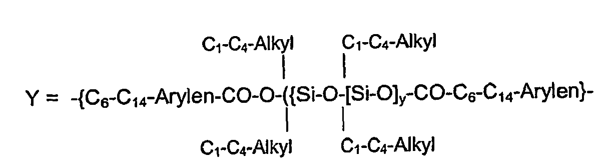 oder 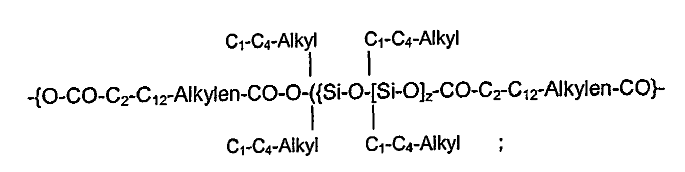 r = 1 bis 70; s = 1 bis 70 und y = 3 bis 50 bedeuten;
- Siloxangruppen enthaltende Polyethersequenzen des Typs 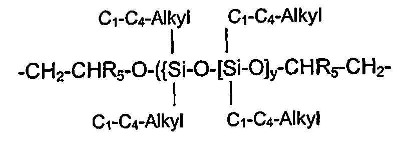 wobei R₅ = H; C₁-C₄-Alkyl und y = 3 bis 50 bedeuten;
- Sequenzen auf Basis von Alkylenoxidaddukten des Melamins vom Typ 2-Amino-4,6-di-C₂-C₄-alkylenamino-1,3,5-triazin - Sequenzen:
- Phenolethersequenzen auf Basis zweiwertiger Phenole und C₂-C₈-Diolen vom Typ -C₂-C₈-Alkylen-O-C₆-C₁₈-Arylen-O-C₂-C₈-Alkylen- Sequenzen;
und/oder
B) Mischungen aus 10 bis 90 Masse% Aminotriazinethern A) und 90 bis 10 Masse% Polyaminotriazinethern mit Molmassen von 300 bis 5000, wobei die Polyaminotriazinether durch thermische Selbstkondensation von Aminotriazinethern A) gebildet werden, und
C) Isocyanaten der Formel R₆ (N = C = O)₂,
wobei R₆ = C₆-C₁₄-Arylen, C₄ - C₁₈-Alkylen, und/oder C₅ - C₈ - Cycloalkylen, und/oder oligomere Polyester bzw. Polyether mit Isocyanatendgruppen und Molmassen von 200 bis 5000,
wobei das Molverhältnis Diisocyanat / Summe Iminogruppen und Aminogruppen in der Triazinsequenz 0,15 : 1 bis 0,65 : 1 beträgt, und
wobei die Mischungen 0,05 bis 2 Masse%, bezogen auf die Aminotriazinether, latente Härter enthalten können,
bei Temperaturen von 85 bis 130°C aufgeschmolzen, umgesetzt und auf textile Trägermaterialien aufgebracht werden.

7. Verfahren zur Herstellung von Prepregs für Faserverbunde hoher Festigkeit und Elastizität, **dadurch gekennzeichnet, dass** Prepregs, die aus 50 bis 85 Masse% textilen Flächengebilden und 15 bis 50 Masse% Carbamidsäureestergruppen enthaltenden Polyaminotriazinethern bestehen, nach einem Flüssigauftragsverfahren hergestellt werden, bei dem Dispersionen in C₅-C₁₂-Kohlenwasserstoffen und/oder C₃-C₁₂-Ketonen oder Lösungen in Dimethylsulfoxid, Dimethylformamid und/oder Dimethylacetamid mit einem Feststoffgehalt von 25 bis 70 Masse% aus
A) Aminotriazinethern der Struktur 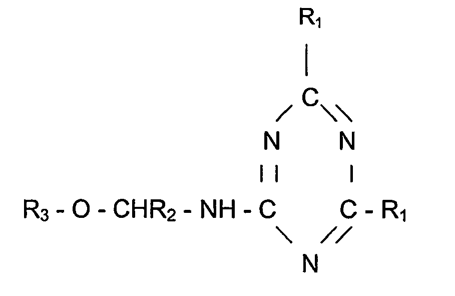
R₁ = -NH₂, ,-NH-CHR₂-OH, -NH-CHR₂-O-R₃, NH-CHR₂-O-R₄-OH, -CH₃, -C₃H₇, -C₆H₅, -OH, Phthalimido-, Succinimido-, -NH-CO-C₅-C₁₈-Alkyl, -NH-C₅-C₁₈-Alkylen-OH, -NH-CHR₂-O-C₅-C₁₈-Alkylen-NH₂, -NH-C₅-C₁₈-Alkylen-NH₂,
R₂ = -H, -C₁-C₇ -Alkyl;
R₃ = -C₁-C₁₈ - Alkyl, -R₄-OH,
R₄ = -CH(CH₃)-CH₂-O-C₂-C₁₂-Alkylen-O-CH₂-CH(CH₃)-,
-CH(CH₃)-CH₂-O-C₂-C₁₂-Arylen-O-CH₂CH(CH₃)-,
-[CH₂-CH₂-O-CH₂CH₂]ₙ -, -[CH₂-CH(CH₃)-O-CH₂-CH(CH₃)]ₙ-, -[O-CH₂-CH₂CH₂CH₂]ₙ-,
-[(CH₂)₂₋₈-O-CO-C₆-C₁₄-Arylen-CO-O-(CH₂)₂₋₈]ₙ -,
-[(CH₂)₂₋₈-O-CO-C₂-C₁₂-Alkylen-CO-O-(CH₂)₂₋₈]ₙ-,
wobei n = 1 bis 200;
- Siloxangruppen enthaltende Polyestersequenzen des Typs -[(X)ᵣ-O-CO-(Y)ₛ-CO-O-(X)ᵣ]-, bei denen
X = -{(CH₂)₂₋₈-O-CO-C₆-C₁₄-Arylen-CO-O-(CH₂)₂₋₈}- oder -{(CH₂)₂₋₈-O-CO-C₂-C₁₂-Alkylen-CO-O-(CH₂)₂₋₈}-; 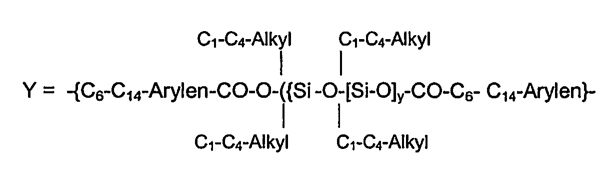 oder 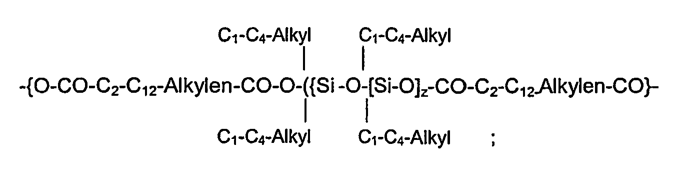 r = 1 bis 70; s = 1 bis 70 und y = 3 bis 50 bedeuten;
- Siloxangruppen enthaltende Polyethersequenzen des Typs 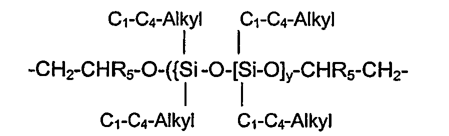
wobei R₅ = H; C₁-C₄-Alkyl und y = 3 bis 50 bedeuten;
- Sequenzen auf Basis von Alkylenoxidaddukten des Melamins vom Typ 2-Amino-4,6-di-C₂-C₄-alkylenamino-1,3,5-triazin - Sequenzen:
- Phenolethersequenzen auf Basis zweiwertiger Phenole und C₂-C₈-Diolen vom Typ -C₂-C₈-Alkylen-O-C₆-C₁₈-Arylen-O-C₂-C₈-Alkylen- Sequenzen;
und/oder
B) Mischungen aus 10 bis 90 Masse% Aminotriazinethem A) und 90 bis 10 Masse% Polyaminotriazinethern mit Molmassen von 300 bis 5000, wobei die Polyaminotriazinether durch Selbstkondensation von Triazinethern A) gebildet werden, und
C) Isocyanaten der Formel R₆ (N = C = O)₂,
wobei R₆ = C₆-C₁₄-Arylen, C₄- C₁₈-Alkylen, und/oder C₅ - C₈ - Cycloalkylen, und/oder oligomere Polyester bzw. Polyether mit Isocyanat- Endgruppen und Molmassen von 200 bis 5000,
wobei das Molverhältnis Diisocyanat / Summe Iminogruppen und Aminogruppen in der Triazinsequenz 0,15 : 1 bis 0,65 : 1 beträgt, und
wobei die Mischungen 0,05 bis 2 Masse%, bezogen auf die Aminotriazinether, latente Härter enthalten können,
bei Temperaturen von 5 bis 80°C auf textile Trägermaterialien aufgebracht und bei 80 bis 120°C/ 0,1 bis 1 bar umgesetzt und getrocknet werden.

8. Verfahren zur Herstellung von Prepregs nach Anspruch 6 oder 7, **dadurch gekennzeichnet, dass** als Aminotriazinether 2,4,6-Tris(methoxymethylamino)-1,3,5-triazin eingesetzt wird.

9. Verfahren zur Herstellung von Prepregs nach mindestens einem der Ansprüche 6 bis 8, **dadurch gekennzeichnet, dass** als latente Härter schwache Säuren, bevorzugt
- blockierte Sulfonsäuren,
- Alkalisalze oder Ammoniumsalze der Phosphorsäure,
- C₁-C₁₂-Alkylester oder C₂-C₈-Hydroxyalkylester von C₆-C₁₄-aromatischen Carbonsäuren oder anorganischen Säuren,
- Salze von Melamin oder Guanaminen mit C₁-C₁₈-aliphatischen Carbonsäuren,
- Anhydride, Halbester oder Halbamide von C₄-C₂₀-Dicarbonsäuren,
- Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten, und/oder
- Salze von C₁-C₁₂-Alkylaminen bzw. Alkanolaminen mit C₁-C₁₈-aliphatischen, C₆-C₁₄-aromatischen oder alkylaromatischen Carbonsäuren sowie anorganischen Säuren vom Typ Salzsäure, Schwefelsäure oder Phosphorsäure,
eingesetzt werden.

10. Faserverbunde, hergestellt unter Verwendung von Prepregs nach einem oder mehreren der Ansprüche 1 bis 5.

11. Verwendung von Faserverbunden nach Anspruch 10 für Hitzeschutzkleidung, Brandschutzdecken, Elektroisolationspapiere, Baukonstruktionsteile und Fahrzeugausrüstungen.

## Claims

1. Prepregs for fiber composites having high strength and resilience, **characterized in that** the prepregs comprise from 50 to 85% by mass of sheet-like textile structures and from 15 to 50% by mass of polyaminotriazine ethers containing carbamic ester groups and based on
A) aminotriazine ethers of the structure 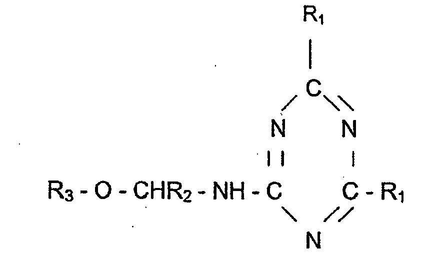 R₁ = -NH₂, -NH-CHR₂-OH, -NH-CHR₂-O-R₃, -NH-CHR₂-O-R₄-OH, -CH₃, -C₃H₇, -C₆H₅, -OH, phthalimido, succinimido-, -NH-CO-C₅-C₁₈-alkyl, -NH-C₅-C₁₈-alkylene-OH, -NH-CHR₂-O-C₅-C₁₈-alkylene-NH₂, -NH-C₅-C₁₈-alkylene-NH₂,
R₂ = -H, -C₁-C₇-alkyl; R₃ = -C₁-C₁₈-alkyl, -R₄-OH,
R₄ = -CH (CH₃) -CH₂-O-C₂-C₁₂-alkylene-O-CH₂-CH (CH₃) -, -CH (CH₃) -CH₂-O-C₂-C₁₂-arylene-O-CH₂-CH(CH₃) -, - [CH₂-CH₂-O-CH₂-CH₂] ₙ-, - [CH₂-CH (CH₃) -O-CH₂-CH(CH₃)]ₙ-, - [O-CH₂-CH₂-CH₂-CH₂]ₙ-, - [(CH₂) ₂₋₈-O-CO-C₆-C₁₄-arylene-CO-O- (CH₂) ₂₋₈] ₙ-, - [(CH₂) ₂₋₈-O-CO-C₂-C₁₂-alkylene-CO-O- (CH₂)₂₋₈] ₙ-, where n = 1 to 200;
- polyester sequences containing siloxane groups of the type - [(X) ᵣ-O-CO- (Y) ₛ-CO-O (X) ᵣ] -, in which
X = {(CH₂) ₂₋₈-O-CO-C₆-C₁₄-arylene-CO-O-(CH₂) ₂₋₈}- or { (CH₂) ₂-₈-O-CO-C₂-C₁₂-alkylene-CO-O- (CH₂) ₂-₈}-; 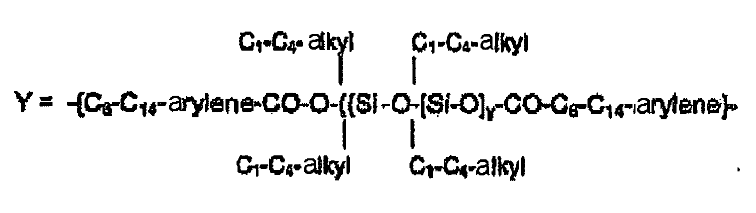 or 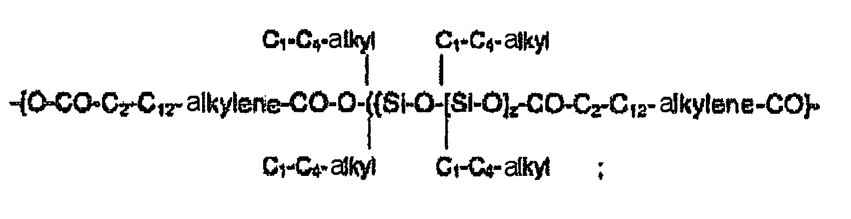 r = 1 to 70; s = 1 to 70 and y = 3 to 50;
- polyether sequences which contain siloxane groups and are of the type 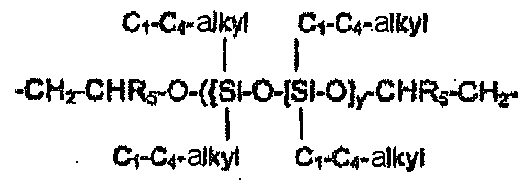
where R₅ = H; C₁-C₄-alkyl and y = 3 to 50;
- sequences based on alkylene oxide adducts of melamine of the type comprising 2-amino-4,6-di-C₂-C₄-alkyleneamino-1,3,5-triazine sequences;
- phenol ether sequences based on dihydric phenols and C₂-C₈-diols of the type comprising -C₂-C₈-alkylene-O-C₆-C₁₈-arylene-O-C₂-C₈-alkylene sequences; and/or
B) mixtures of from 10 to 90% by mass of aminotriazine ethers A) and from 90 to 10% by mass of polyaminotriazine ethers having molar masses of from 300 to 5000, the polyaminotriazine ethers being formed by thermal autocondensation of aminotriazine ethers A), and
C) isocyanates of the formula R₆(N = C = O)₂, where R₆ = C₆-C₁₄-arylene, C₄-C₁₈-alkylene and/or C₅-C₈-cycloalkylene, and/or oligomeric polyesters or polyethers having terminal isocyanate groups and molar masses of from 200 to 5000,
the molar ratio of triazine segment to carbamic ester groups being from 1 : 1 to 1 : 4.

2. Prepregs according to Claim 1, **characterized in that** the textile substrate materials are woven fabrics or nonwovens, preferably woven fabrics or nonwovens comprising glass fibers, carbon fibers, polyamide fibers, polyester fibers, polypropylene fibers and/or thermosetting plastic fibers.

3. Prepregs according to Claim 1 or 2, **characterized in that** the ratio of aldehyde component to triazine component is from 1 : 1 to 3 : 1 in the polyaminotriazine ethers containing carbamic ester groups.

4. Prepregs according to at least one of the preceding claims, **characterized in that** the polyaminotriazine ethers containing carbamic ester groups are polyaminotriazine ethers based on melamine, formaldehyde, methanol and diisocyanates of the type R₆(N = C = O)₂.

5. Prepregs according to at least one of the preceding claims, **characterized in that** the polyaminotriazine ethers containing carbamic ester groups are polyaminotriazine ethers based on
B) mixtures of from 5 to 30% by mass of aminotriazine ethers A) and from 95 to 70% by mass of polyaminotriazine ethers having molar masses of from 300 to 5000, the polyaminotriazine ethers being formed by thermal autocondensation of aminotriazine ethers A), and
C) isocyanates of the formula R₆(N = C = O)₂, where R₄ = C₄-C₁₈-alkylene and/or C₅-C₈-cycloalkylene, and/or oligomeric polyesters or polyethers having terminal isocyanate groups and molar masses of from 200 to 5000.

6. Process for the production of prepregs for fiber composites having high strength and resilience, **characterized in that** prepregs which comprise from 50 to 85% by mass of sheet-like textile structures and from 15 to 50% by mass of polyaminotriazine ethers containing carbamic ester groups are produced by a melt application method in which mixtures of
A) aminotriazine ethers of the structure 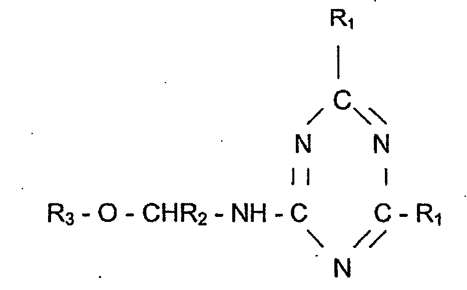 R₁ = -NH₂, -NH-CHR₂-OH, -NH-CHR₂-O-R₃, -NH-CHR₂-O-R₄-OH, -CH₃, -C₃H₇, -C₆H₅, -OH, phthalimido, succinimido-, -NH-CO-C₅-C₁₈-alkyl, -NH-C₅-C₁₈-alkylene-OH, -NH-CHR₂-O-C₅-C₁₈-alkylene-NH₂, -NH-C₅-C₁₈-alkylene-NH₂ ,
R₂ = -H, -C₁-C₇-alkyl;
R₃ = -C₁-C₁₈-alkyl, -R₄-OH,
R₄ = -CH (CH₃) -CH₂-O-C₂-C₁₂-alkylene-O-CH₂-CH(CH₃) -, -CH (CH₃) -CH₂-O-C₂-C₁₂-arylene-O-CH₂-CH (CH₃) -, - [CH₂-CH₂-O-CH₂-CH₂]ₙ-, - [CH₂-CH(CH₃)-O-CH₂-CH(CH₃)]ₙ-, - [O-CH₂-CH₂-CH₂-CH₂] ₙ- , - [(CH₂) ₂₋₈-O-CO-C₆-C₁₄-arylene-CO-O- (CH₂) ₂-₈] ₙ- , - [(CH₂) ₂₋₈-O-CO-C₂-C₁₂-alkylene-CO-O- (CH₂) ₂₋₈] ₙ-, where n = 1 to 200;
- polyester sequences containing siloxane groups of the type - [(X)ᵣ-O-CO- (Y)ₛ-CO-O (X)ᵣ] -, in which
X = {(CH₂) ₂₋₈-O-CO-C₆-C₁₄-arylene-CO-O-(CH₂) ₂₋₈} - or { (CH₂) ₂₋₈-O-CO-C₂-C₁₂-alkylene-CO-O- (CH₂) ₂₋₈}-; 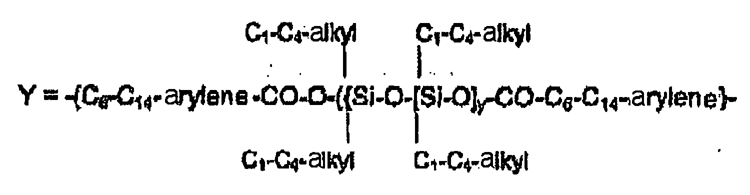 or 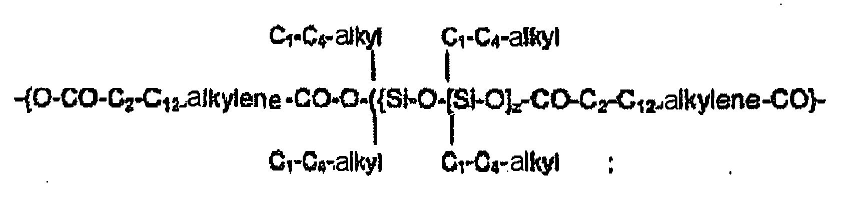 r = 1 to 70; s = 1 to 70 and y = 3 to 50;
- polyether sequences containing siloxane groups of the type 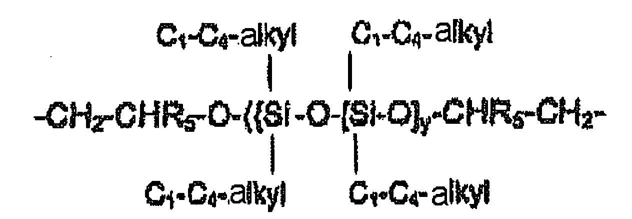
where R₅ = H; C₁-C₄-alkyl and y = 3 to 50;
- sequences based on alkylene oxide adducts of melamine of the type comprising 2-amino-4,6-di-C₂-C₄-alkyleneamino-1,3,5-triazine sequences:
- phenol ether sequences based on dihydric phenols and C₂-C₈-diols of the type comprising -C₂-C₈-alkylene-O-C₆-C₁₈-arylene-O-C₂-C₈-alkylene sequences; and/or
B) mixtures of from 10 to 90% by mass of aminotriazine ethers A) and from 90 to 10% by mass of polyaminotriazine ethers having molar masses of from 300 to 5000, the polyaminotriazine ethers being formed by thermal autocondensation of aminotriazine ethers A),
and
C) isocyanates of the formula R₆(N = C = O)₂, where R₆ = C₆-C₁₄-arylene, C₄-C₁₈-alkylene and/or C₅-C₈-cycloalkylene, and/or oligomeric polyesters or polyethers having terminal isocyanate groups and molar masses of from 200 to 5000,
the molar ratio of diisocyanate to the sum of imino groups and amino groups in the triazine sequence being from 0.15 : 1 to 0.65 : 1, and it being possible for the mixtures to contain from 0.05 to 2% by mass, based on the aminotriazine ethers, of latent curing agents,
are melted at temperatures of from 85 to 130°C, reacted, and applied to textile substrate materials.

7. Process for the production of prepregs for fiber composites having high strength and resilience, **characterized in that** prepregs which comprise from 50 to 85% by mass of sheet-like textile structures and from 15 to 50% by mass of polyaminotriazine ethers containing carbamic ester groups are produced by a liquid application method in which dispersions in C₅-C₁₂-hydrocarbons and/or C₃-C₁₂- ketones or solutions in dimethyl sulfoxide, dimethylformamide and/or dimethylacetamide having a solids content of from 25 to 70% by mass, comprising
A) aminotriazine ethers of the structure 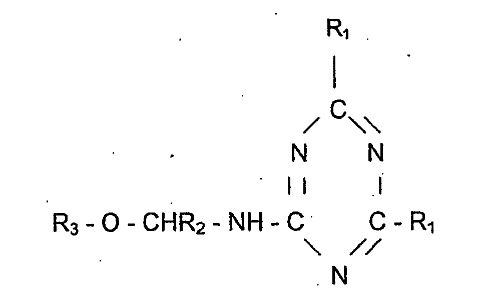 R₁ = -NH₂, -NH-CHR₂-OH, -NH-CHR₂-O-R₃, -NH-CHR_{z}-O-R₄-OH, -CH₃, -C₃H₇, - C₆H₅, -OH, phthalimido, succinimido-, -NH-CO-C₅-C₁₈-alkyl, -NH-C₅-C₁₈-alkylene-OH, -NH-CHR₂-O-C₅-C₁₈-alkylene-NH₂, -NH-C₅-C₁₈-alkylene-NH₂,
R₂ = -H, -C₁-C₇-alkyl;
R₃ = -C₁-C₁₈-alkyl, -R₄-OH,
R₄ = -CH(CH₃) -CH₂-O-C₂-C₁₂-alkylene-O-CH₂-CH(CH₃) -, -CH(CH₃) -CH₂-O-C₂-C₁₂-arylene-O-CH₂-CH(CH₃) -, - [CH₂-CH₂-O-CH₂-CH₂] ₙ-, - [CH₂-CH(CH₃) -O-CH₂-CH(CH₃)]ₙ-, - [O-CH₂-CH₂-CH₂-CH₂]ₙ-, - [(CH₂) ₂₋₈-O-CO-C₆-C₁₄-arylene-CO-O- (CH₂) ₂₋₈] ₙ- , - [(CH₂) ₂₋₈-O-CO-C₂-C₁₂-alkylene-CO-O- (CH₂) ₂₋₈] ₙ- , where n = 1 to 200;
- polyester sequences containing siloxane groups of the type- [(X)ᵣ-O-CO- (Y)ₛ-CO-O (X)ᵣ] -, in which
X = {(CH₂)₂₋₈-O-CO-C₆-C₁₄-arylene-CO-O- (CH₂)₂₋₈}- or { (CH₂) ₂₋₈-O-CO-C₂-C₁₂-alkylene-CO-O- (CH₂) ₂₋₈} - ; 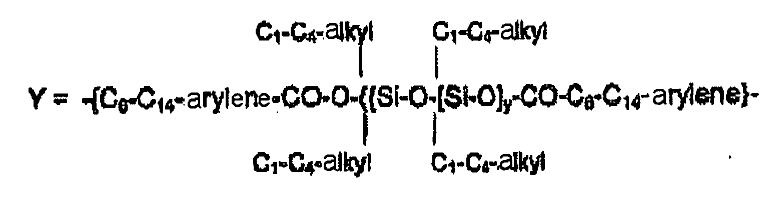 or 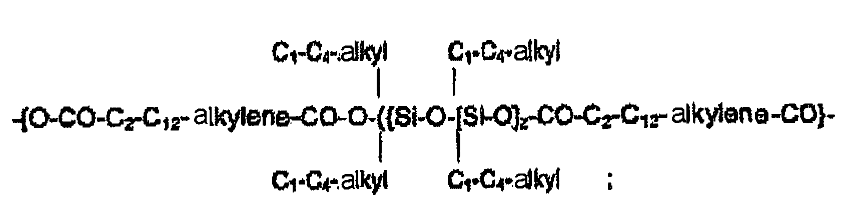 r = 1 to 70; s = 1 to 70 and y = 3 to 50;
- polyether sequences containing siloxane groups and of the type 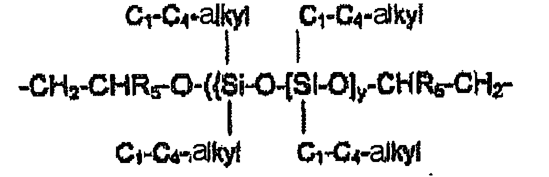
where R₅ = H; C₁-C₄-alkyl and y = 3 to 50;
- sequences based on alkylene oxide adducts of melamine of the type comprising 2-amino-4,6-di-C₂-C₄-alkyleneamino-1,3,5-triazine sequences;
- phenol ether sequences based on dihydric phenols and C₂-C₈-diols of the type comprising -C₂-C₈-alkylene-O-C₆-C₁₈-arylene-O-C₂-C₈-alkylene sequences; and/or
B) mixtures of from 10 to 90% by mass of aminotriazine ethers A) and from 90 to 10% by mass of polyaminotriazine ethers having molar masses of from 300 to 5000, the polyaminotriazine ethers being formed by autocondensation of triazine ethers A), and
C) isocyanates of the formula R₆(N = C = O)₂,
where R₆ = C₆-C₁₄-arylene, C₄-C₁₈-alkylene and/or C₅-C₈-cycloalkylene, and/or oligomeric polyesters or polyethers having terminal isocyanate groups and molar masses of from 200 to 5000,
the molar ratio of diisocyanate to the sum of imino groups and amino groups in the triazine sequence being from 0.15 : 1 to 0.65 : 1, and it being possible for the mixtures to contain from 0.05 to 2% by mass, based on the aminotriazine ethers, of latent curing agents,
are applied at temperatures from 5 to 80°C to textile substrate materials and reacted at from 80 to 120°C/from 0.1 to 1 bar and dried.

8. Process for the production of prepregs according to Claim 6 or 7, **characterized in that** the aminotriazine ether used is 2,4,6-tris(methoxymethylamino)-1,3,5-triazine.

9. Process for the production of prepregs according to at least one of Claims 6 to 8, **characterized in that** the latent curing agents used are weak acids, preferably
- blocked sulfonic acids,
- alkali metal salts or ammonium salts of phosphoric acid,
- C₁-C₁₂-alkyl esters or C₂-C₈-hydroxyalkyl esters of aromatic C₆-C₁₄-carboxylic acids or inorganic acids,
- salts of melamine or guanamines with aliphatic C₁-C₁₈-carboxylic acids,
- anhydrides, monoesters or monoamides of C₄-C₂₀-dicarboxylic acids,
- monoesters or monoamides of copolymers of ethylenically unsaturated C₄-C₂₀-dicarboxylic anhydrides and ethylenically unsaturated monomers of the type comprising C₂-C₂₀-olefins and/or C₈-C₂₀-vinylaromatics, and/or
- salts of C₁-C₁₂-alkylamines or alkanolamines with aliphatic C₁-C₁₈-carboxylic acids, aromatic C₆-C₁₄-carboxylic acids or alkylaromatic carboxylic acids and inorganic acids of the hydrochloric acid, sulfuric acid or phosphoric acid type.

10. Fiber composites produced using prepregs according to one or more of Claims 1 to 5.

11. Use of fiber composites according to Claim 10 for heat protection clothing, fire protection blankets, electrical insulation papers, construction parts and vehicle fittings.

## Revendications

1. Agents de pré-imprégnation pour composites fibreux de résistance et élasticité élevées, **caractérisés en ce que** les agents de pré-imprégnation sont constitués par 50 à 85% en masse de structures planes textiles et par 15 à 50% en masse de polyaminotriazinéthers contenant des groupes ester de l'acide carbamique à base
A) d'aminotriazinéthers de structure 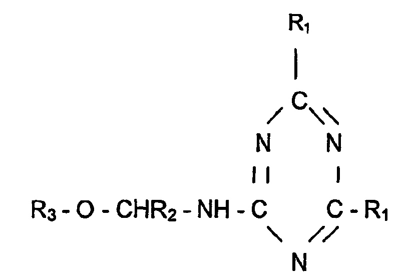
R₁ = -NH₂, -NH-CHR₂-OH, -NH-CHR₂-O-R₃, -NH-CHR₂-O-R₄-OH, -CH₃, -C₃H₇, -C₆H₅, -OH, phtalimido-, succinimido-, -NH- CO- C₅ - C₁₈ -alkyle, -NH-C₅-C₁₈-alkylène-OH, -NH-CHR₂-O-C₅-C₁₈-alkylène-NH₂, -NH-C₅-C₁₈-alkylène-NH₂,
R₂ = -H, -C₁-C₇-alkyle ;
R₃ = -C₁-C₁₈-alkyle, -R₄-OH,
R₄ = -CH(CH₃) -CH₂-O-C₂-C₁₂-alkylène-O-CH₂-CH (CH₃) -, -CH(CH₃)-CH₂-O-C₂-C₁₂-arylène-O-CH₂-CH(CH₃)-, - [CH₂-CH₂-O-CH₂-CH₂] ₙ-, - [CH₂-CH(CH₃) -O-CH₂- CH (CH₃)]ₙ-, - [O-CH₂-CH₂-CH₂-CH₂]ₙ-, - [(CH₂) ₂₋₈-O-CO-C₆-C₁₄-arylène-CO-O- (CH₂) ₂₋₈] ₙ-, - [(CH₂) ₂₋₈-O-CO-C₂-C₁₂-alkylène-CO-O- (CH₂) ₂₋₈] ₙ-,
n signifiant 1 à 200 ;
- des séquences de type polyester contenant des groupes siloxane de type -[(X)ᵣ-O-CO-(Y)ₛ-CO-O-(X) ᵣ] - où
X = - { (CH₂) ₂₋₈-O-CO-C₆-C₁₄-arylène-CO-O- (CH₂) ₂₋₈} - ou - {(CH₂) ₂₋₈-O-CO-C₂-C₁₂-alkylène-CO-O-(CH₂) ₂₋₈} - ; 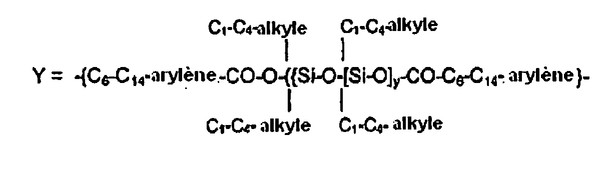 ou 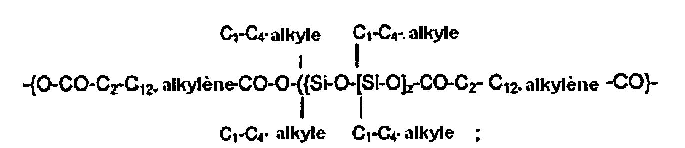 r = 1 à 70 ; s = 1 à 70 et y = 3 à 50 ;
- des séquences de type polyéther contenant des groupes siloxane du type 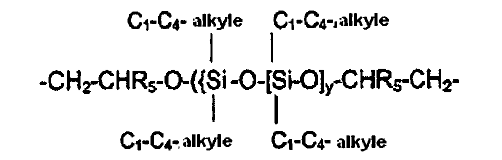 où R₅ = H ; C₁-C₄-alkyle et y = 3 à 50 ;
- des séquences à base de produits d'addition d'oxyde d'alkylène de la mélamine du type de séquences 2-amino-4,6-di-C₂-C₄-alkylèneamino-1,3,5-triazine :
- des séquences de type phénoléther à base de phénols divalents et de C₂-C₈-diols de type de séquences -C₂-C₈-alkylène-O-C₆-C₁₈-arylène-O-C₂-C₈-alkylène- ;
et/ou
B) de mélanges de 10 à 90% en masse d'aminotriazinéthers A) et de 90 à 10% en masse de polyaminotriazinéthers présentant des masses molaires de 300 à 5 000, où les polyaminotriazinéthers sont formés par autocondensation thermique d'aminotriazinéthers A), et
C) d'isocyanates de formule R₆ (N = C = O)₂,
où R₆ = C₆-C₁₄-arylène, C₄-C₁₈-alkylène, et/ou C₅-C₈-cycloalkylène, et/ou des polyesters ou des polyéthers oligomères avec des groupes terminaux de type isocyanate et des masses molaires de 200 à 5 000,
le rapport molaire segment de type triazine/groupes ester de l'acide carbamique étant de 1:1 à 1:4.

2. Agents de pré-imprégnation selon la revendication 1, **caractérisés en ce que** les matériaux support textiles sont des tissus ou des non-tissés, de préférence des tissus ou des non-tissés à base de fibres de verre, de fibres de carbone, de fibres de polyamide, de fibres de polyester, de fibres de polypropylène et/ou de fibres en résine thermodurcissable.

3. Agents de pré-imprégnation selon la revendication 1 ou 2, **caractérisés en ce que** dans les polyaminotriazinéthers contenant des groupes ester de l'acide carbamique, le rapport composant aldéhyde/composant triazine est de 1:1 à 3:1.

4. Agents de pré-imprégnation selon l'une quelconque des revendications précédentes, **caractérisés en ce que** les polyaminotriazinéthers contenant des groupes ester de l'acide carbamique sont des polyaminotriazinéthers à base de mélamine, de formaldéhyde, de méthanol et de diisocyanates du type R₆ (N = C = O)₂.

5. Agents de pré-imprégnation selon au moins l'une quelconque des revendications précédentes, **caractérisés en ce que** les polyaminotriazinéthers contenant des groupes acide carbamique sont des polyaminotriazinéthers à base
B) de mélanges de 5 à 30% en masse d'aminotriazinéthers A) et de 95 à 70% en masse de polyaminotriazinéthers présentant des masses molaires de 300 à 5 000, où les polyaminotriazinéthers sont formés par autocondensation thermique d'aminotriazinéthers A), et
C) d'isocyanates de formule R₆ (N = C = O)₂, où R₄ = C₄-C₁₈-alkylène, et/ou C₅-C₈-cycloalkylène, et/ou des polyesters ou des polyéthers oligomères avec des groupes terminaux de type isocyanate et des masses molaires de 200 à 5 000.

6. Procédé pour la préparation d'agents de pré-imprégnation pour composites fibreux de résistance et élasticité élevées, **caractérisé en ce que** les agents de pré-imprégnation sont constitués par 50 à 85% en masse de structures planes textiles et par 15 à 50% en masse de polyaminotriazinéthers contenant des groupes ester de l'acide carbamique, selon un procédé d'application à partir de la masse fondue, dans lequel des mélanges
A) d'aminotriazinéthers de structure 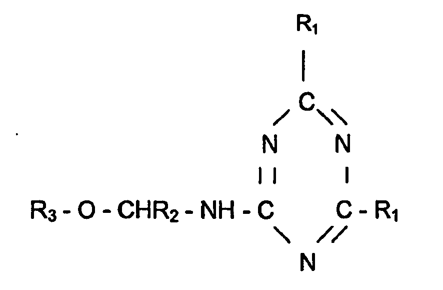
R₁ = -NH₂, -NH-CHR₂-OH, -NH-CHR₂-O-R₃, -NH-CHR₂-O-R₄-OH, -CH₃, -C₃H₇, -C₆H₅, -OH, phtalimido-, succinimido-, -NH-CO-C₅-C₁₈-alkyle, -NH-C₅-C₁₈-alkylène-OH, -NH- CHR₂-O-C₅-C₁₈-alkylène-NH₂, -NH-C₅-C₁₈-alkylène-NH₂,
R₂ = -H, -C₁-C₇-alkyle ;
R₃ = -C₁-C₁₈-alkyle, -R₄-OH,
R₄ = -CH(CH₃) -CH₂-O-C₂-C₁₂-alkylène-O-CH₂-CH(CH₃) -, -CH(CH₃)-CH₂-O-C₂-C₁₂-arylène-O-CH₂-CH(CH₃)-, - [CH₂-CH₂-O-CH₂-CH₂] ₙ-. - [CH₂-CH (CH₃) -O-CH₂- CH (CH₃)] ₙ-, - [O-CH₂-CH₂-CH₂-CH₂]ₙ, - [(CH₂) ₂₋₈-O-CO-C₆-C₁₄-arylène-CO-O- (CH₂) ₂₋₈] ₙ-, - [(CH₂) ₂₋₈-O-CO-C₂-C₁₂-alkylène-CO-O- (CH₂) ₂₋₈] ₙ-, n signifiant 1 à 200 ; - des séquences de type polyester contenant des groupes siloxane de type -[(X)ᵣ-O-CO-(Y)ₛ-CO-O-(X)ᵣ]-,
où
X = -{(CH₂)₂-₈-O-CO-C₆-C₁₄-arylène-CO-O-(CH₂)₂₋₈}- ou -{(CH₂)₂₋₈-O-CO-C₂-C₁₂-alkylène-CO-O-(CH₂)₂₋₈}- ; 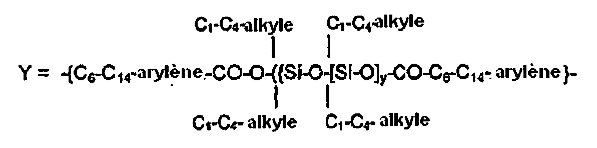 ou 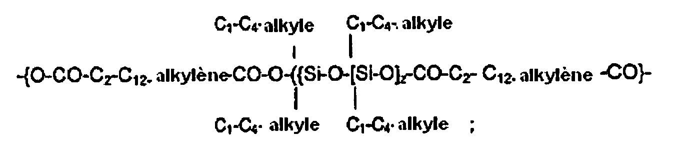 r = 1 à 70 ; s = 1 à 70 et y = 3 à 50 ;
- des séquences de type polyéther contenant des groupes siloxane du type 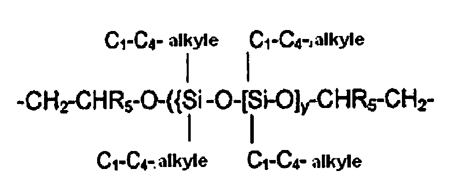
où R₅ = H ; C₁-C₄-alkyle et y = 3 à 50 ;
- des séquences à base de produits d'addition d'oxyde d'alkylène de la mélamine du type de séquences 2-amino-4,6-di-C₂-C₄-alkylèneamino-1,3,5-triazine :
- des séquences de type phénoléther à base de phénols divalents et de C₂-C₈-diols de type de séquences -C₂-C₈-alkylène-O-C₆-C₁₈-arylène-O-C₂-C₈-alkylène- ;
et/ou
B) de mélanges de 10 à 90% en masse d'aminotriazinéthers A) et de 90 à 10% en masse de polyaminotriazinéthers présentant des masses molaires de 300 à 5 000, où les polyaminotriazinéthers sont formés par autocondensation thermique d'aminotriazinéthers A), et
C) d'isocyanates de formule R₆ (N = C = O)₂, où R₆ = C₆-C₁₄-arylène, C₄-C₁₈-alkylène, et/ou C₅-C₈-cycloalkylène, et/ou des polyesters ou des polyéthers oligomères avec des groupes terminaux de type isocyanate et des masses molaires de 200 à 5 000,
le rapport molaire diisocyanate/somme des groupes imino et amino dans la séquence de type triazine étant de 0,15:1 à 0,65:1, et
les mélanges pouvant contenir 0,05 à 2% en masse, par rapport à l'aminotriazinéther, de durcisseurs latents,
sont fondus à des températures de 85 à 130°C, transformés et appliqués sur des matériaux support textiles.

7. Procédé pour la préparation d'agents de pré-imprégnation pour composites fibreux de résistance et élasticité élevées, **caractérisé en ce que** les agents de pré-imprégnation qui sont constitués par 50 à 85% en masse de structures planes textiles et par 15 à 50% en masse de polyaminotriazinéthers contenant des groupes ester de l'acide carbamique, sont préparés selon un procédé d'application en phase liquide, dans lequel des dispersions dans des hydrocarbures en C₅ à C₁₂ et/ou dans des cétones en C₃ à C₁₂ ou des solutions dans du diméthylsulfoxyde, du diméthylformamide et/ou du diméthylacétamide présentant une teneur en solides de 25 à 70% en masse
A) d'aminotriazinéthers de structure 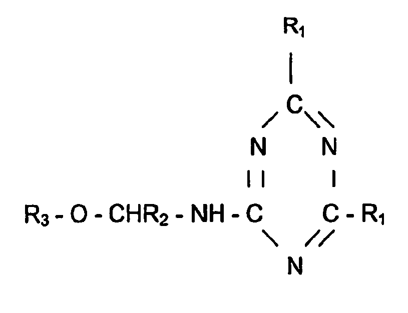
R₁ = -NH₂, -NH-CHR₂-OH, -NH-CHR₂-O-R₃, -NH-CHR₂-O-R₄-OH, -CH₃, -C₃H₇, -C₆H₅, -OH, phtalimido-, succinimido-, -NH-CO-C₅-C₁₈-alkyle, -NH-C₅-C₁₈-alkylène-OH, -NH- CHR₂-O-C₅-C₁₈-alkylène-NH₂, -NH-C₅-C₁₈-alkylène-NH₂,
R₂ = -H, -C₁-C₇-alkyle ;
R₃ = -C₁-C₁₈-alkyle, -R₄-OH
R₄ = -CH(CH₃) -CH₂-O-C₂-C₁₂-alkylène-O-CH₂-CH(CH₃) -, -CH(CH₃)-CH₂-O-C₂-C₁₂-arylène-O-CH₂-CH(CH₃) -, - [CH₂-CH₂-O-CH₂-CH₂]ₙ-, - [CH₂-CH(CH₃) -O-CH₂-CH(CH₃)]ₙ-, - [O-CH₂-CH₂-CH₂-CH₂]ₙ-, - [(CH₂) ₂₋₈-O-CO-C₆-C₁₄-arylène-CO-O- (CH₂) ₂₋₈] ₙ-, - [ (CH₂) ₂₋₈-O-CO-C₂-C₁₂-alkylène-CO-O- (CH₂) ₂₋₈] ₙ- ,
n signifiant 1 à 200 ;
- des séquences de type polyester contenant des groupes siloxane de type -[(X)ᵣ-O-CO-(Y)ₛ-CO-O-(X)ᵣ]-,
X = -{(CH₂)₂₋₈-O-CO-C₆-C₁₄-arylène-CO-O-(CH₂)₂₋₈}- ou -{(CH₂)₂₋₈-O-CO-C₂-C₁₂-alkylène-CO-O-(CH₂)₂₋₈}- ; 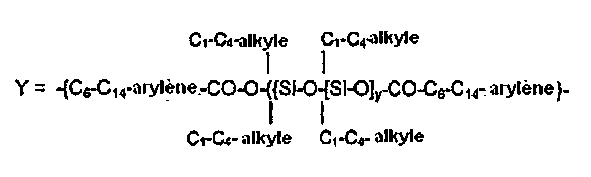 ou 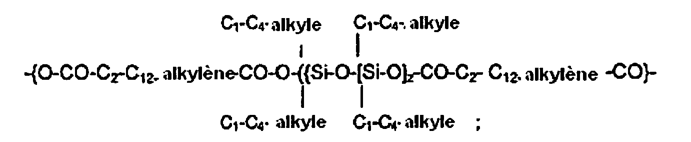 r = 1 à 70 ; s = 1 à 70 et y = 3 à 50 ;
- des séquences de type polyéther contenant des groupes siloxane du type 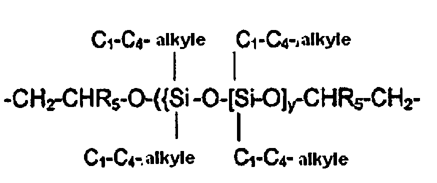 où R₅ = H ; C₁-C₄-alkyle et y = 3 à 50 ;
- des séquences à base de produits d'addition d'oxyde d'alkylène de la mélamine du type de séquences 2-amino-4,6-di-C₂-C₄-alkylèneamino-1,3,5-triazine :
- des séquences de type phénoléther à base de phénols divalents et de C₂-C₈-diols de type de séquences -C₂-C₈-alkylène-O-C₆-C₁₈-arylène-O-C₂-C₈-alkylène- ;
et/ou
B) de mélanges de 10 à 90% en masse d'aminotriazinéthers A) et de 90 à 10% en masse de polyaminotriazinéthers présentant des masses molaires de 300 à 5 000, où les polyaminotriazinéthers sont formés par autocondensation thermique d'aminotriazinéthers A), et
C) d'isocyanates de formule R₆ (N = C = O)₂, où R₆ = C₆-C₁₄-arylène, C₄-C₁₈-alkylène, et/ou C₅-C₈-cycloalkylène, et/ou des polyesters ou des polyéthers oligomères avec des groupes terminaux de type isocyanate et des masses molaires de 200 à 5 000, le rapport molaire diisocyanate/somme des groupes imino et amino dans la séquence de type triazine étant de 0,15:1 à 0,65:1, et
les mélanges pouvant contenir 0,05 à 2% en masse, par rapport à l'aminotriazinéther, de durcisseurs latents,
sont appliquées à des températures de 5 à 80°C sur des matériaux support textiles et transformées à 80 à 120°C/ 0,1 à 1 bar et séchées.

8. Procédé pour la préparation d'agents de pré-imprégnation selon la revendication 6 ou 7 **caractérisé en ce qu'**on utilise, comme aminotriazinéther de la 2,4,6-tris(méthoxyméthylamino)-1,3,5-triazine.

9. Procédé pour la préparation d'agents de pré-imprégnation selon au moins l'une quelconque des revendications 6 à 8, **caractérisé en ce qu'**on utilise, comme durcisseurs latents, des acides faibles, de préférence
- des acides sulfoniques bloqués,
- des sels alcalins ou d'ammonium de l'acide phosphorique,
- des esters C₁-C₁₂-alkyliques ou des esters C₂-C₈-hydroxyalkyliques d'acides carboxyliques aromatiques en C₆-C₁₄ ou des acides inorganiques,
- des sels de la mélamine ou de guanamines avec des acides carboxyliques aliphatiques en C₁-C₁₈,
- des anhydrides, des semi-esters ou des semi-amides d'acides dicarboxyliques en C₄-C₂₀,
- des semi-esters ou des semi-amides de copolymères d'anhydrides d'acides dicarboxyliques en C₄-C₂₀ éthyléniquement insaturés et de monomères éthyléniquement insaturés du type oléfine en C₂-C₂₀ et/ou aromatiques de vinyle en C₈-C₂₀, et/ou
- des sels d'alkylamines en C₁-C₁₂ ou d'alcanolamines avec des acides carboxyliques aliphatiques en C₁-C₁₈, aromatiques en C₆-C₁₄ ou alkylaromatiques ainsi que d'acides inorganiques de type acide chlorhydrique, sulfurique ou phosphorique.

10. Composites fibreux, préparés en utilisant des agents de pré-imprégnation selon l'une ou plusieurs des revendications 1 à 5.

11. Utilisation de composites fibreux selon la revendication 10 pour les vêtements de protection contre la chaleur, les couvertures de protection contre le feu, les papiers d'isolation de pièces électriques, les pièces de construction et les équipements de véhicules.
